# EUROPEAN PATENT APPLICATION

(11) **EP 4 411 536 A1**
(43) Date of publication of application: **07.08.2024**
(21) Application number: 24154111.9
(22) Date of filing: 26.01.2024
(51) Int. Cl.: G06F 9/30, G06F 15/78

(54) **MEMORY DEVICE AND METHOD OF OPERATING THE SAME**

(30) Priority: 06.02.2023 KR 20230015834
(71) Applicant: Samsung Electronics Co., Ltd., Suwon-si, Gyeonggi-do 16677 (KR)
(72) Inventor: Yang, Wooram, 16678 Suwon-si, Gyeonggi-do (KR); Cho, Yeongon Cho, 16678 Suwon-si, Gyeonggi-do (KR)
(74) Representative: Grünecker Patent- und Rechtsanwälte PartG mbB

(57) **Abstract**

A memory device includes: a device controller configured to generate a sub-processing instruction based on a host processing instruction received from a host; and a processing engine configured to perform an operation based on the generated sub-processing instruction.

## Description

### BACKGROUND

### 1. Field

The following description relates to a memory device and a method of operating the same.

### 2. Description of Related Art

Efficient and high-performance neural network processing is important in devices such as computers, smartphones, tablets, and wearable devices. In some examples, a device may implement special hardware accelerators to perform specialized tasks, along with an increase in processing performance according to the reduction of power consumption. For example, a plurality of hardware accelerators may be connected to generate a calculation graph for imaging and computer vision applications. Thus, a subsystem for imaging and computer vision acceleration may include a large number of special hardware accelerators with efficient streaming interconnections to transmit data between hardware accelerators. A near-memory accelerator may refer to an accelerator implemented by a hardware accelerator near a memory. In-memory computing may refer to hardware acceleration implemented in a memory.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one or more general aspects, a memory device includes: a device controller configured to generate a sub-processing instruction based on a host processing instruction received from a host; and a processing engine configured to perform an operation based on the generated sub-processing instruction.

The processing engine may be configured to generate an intermediate result by performing the operation according to the generated sub-processing instruction, and the memory device may include a processing near-memory (PNM) engine configured to, in response to obtaining the generated intermediate result, generate an operation result of the operation by processing the generated intermediate result.

The processing engine may include either one or both of: a processing near-memory (PNM) engine configured to perform a PNM operation according to the generated sub-processing instruction; and a processing in-memory (PIM) engine configured to perform a PIM operation according to the generated sub-processing instruction.

The device controller may be configured to: generate a first level instruction as the sub-processing instruction from the host processing instruction and transmit the first level instruction to the PNM engine; and generate a second level instruction from the first level instruction and transmit the second level instruction to the PIM engine.

The device controller may include: a device interface configured to receive a packet from the host; and an address decoder configured to identify whether the received packet indicates either a memory access request or a processing request, based on an access address of the received packet.

The device controller may be configured to receive, from the host, a plurality of host processing instructions comprising the host processing instruction in a first order; and the processing engine may be configured to perform operations by processing the host processing instructions in a second order that is different from the first order and is determined based on access addresses of the host processing instructions.

The device controller may include an instruction buffer configured to store the host processing instruction in an order designated by the host, in response to a received packet being identified as indicating a processing request.

The instruction buffer may be configured to: traverse and increment an instruction counter; and, in response to the host processing instruction being stored in an entry indicated by the instruction counter, transmit the stored host processing instruction to an instruction decoder.

The device controller may include an instruction decoder configured to transmit an operation corresponding to the host processing instruction received from an instruction buffer to either one or both of a processing near-memory (PNM) engine and an instruction generator.

The instruction decoder may be configured to transmit the host processing instruction to the PNM engine, in response to the host processing instruction matching with a pre-stored operation identification code for an operation level corresponding to the instruction decoder.

The instruction decoder may be configured to transmit the host processing instruction to the instruction generator, in response to the host processing instruction not matching with a pre-stored operation identification code for an operation level corresponding to the instruction decoder.

The device controller may include an instruction generator configured to generate the sub-processing instruction from the received host processing instruction, and transmit the generated sub-processing instruction to a memory scheduler.

The instruction generator may include a predefined instruction table and may be configured to have generate the sub-processing instruction according to a result of matching between the instruction table and the host processing instruction.

The instruction generator may be configured to, in response to the host processing instruction being either one of a sparse lengths sum (SLS) operation and a multiplication and accumulation (MAC) operation, generate the sub-processing instruction for the corresponding either one of the SLS operation and the MAC operation.

The device controller may include a memory scheduler configured to schedule access by processing host memory instructions in an out-of-order mode, in response to a normal memory access to memory blocks being requested from the host.

The device controller may include a memory scheduler configured to schedule access to memory blocks by processing the host processing instructions in an in-order mode, in response to the host processing instruction being requested from the host.

The memory device may include a logic die in which a processing near-memory (PNM) engine configured to generate an operation result and the device controller are disposed.

An additional PNM engine configured to receive a PIM operation result and generate an intermediate result may be additionally disposed in the logic die.

The memory device may include a memory die in which a memory block configured to store data and a processing in-memory (PIM) engine of the processing engine are disposed, wherein the PIM engine configured to generate a PIM operation result.

The device controller may be configured to: receive the host processing instruction from the host; and transmit, to the host, a final operation result according to a series of operations corresponding to the host processing instruction.

The sub-processing instruction may include a dot product instruction comprising input fragments of an input vector and an address of weight elements of a weight matrix, and, for the performing of the operation based on the generated sub-processing instruction, the processing engine may be configured to read the weight elements from a memory block based on the address, and generate a partial operation result based on the read the weight elements and the input fragments.

The memory device may include a processing near-memory (PNM) engine configured to generate a final output vector based on a plurality of partial operation results including the partial operation result.

An electronic device may include: the memory device; and the host, wherein the host is a host processor.

In one or more general aspects, a method of operating a memory device includes: generating a sub-processing instruction based on a host processing instruction received from a host; and performing an operation based on the generated sub-processing instruction.

In one or more general aspects, a memory device includes: a memory configured to store data; a processing engine configured to perform an operation using data stored in the memory; and a memory device controller configured to: receive a host processing instruction from a host; generate, based on the received host processing instruction, a sub-processing instruction to be used in an operation of the processing engine; and transmit the sub-processing instruction to the processing engine.

The memory device may include: a memory die comprising the memory; and a logic die comprising the memory device controller.

The logic die may include the processing engine.

The processing engine of the logic die may be a first processing engine, and the memory die further may include a plurality of second processing engines.

The memory may include a plurality of memory blocks, and the second processing engines may be positioned between the memory blocks.

The memory die may include the processing engine.

The processing engine of the memory die may be a second processing engine, and the logic die further may include a first processing engine.

The memory die may include a plurality of second processing engines.

In one or more general aspects, a memory device includes: a device controller configured to generate sub-processing instructions based on a host processing instruction received from a host; second processing engines each configured to generate a partial result based on a respective one of the generated sub-processing instructions; and a first processing engine configured to generate an operation result of the operation by processing the generated partial results.

The first processing engine may be a processing near-memory (PNM) engine and the second processing engines may be processing in-memory (PIM) engines.

Other features and aspects will be apparent from the following detailed description, the drawings, and the claims.

### BRIEF DESCRIPTION OF THE DRAWINGS

FIG. 1 illustrates an example of an electronic device.
FIG. 2 illustrates a memory device.
FIG. 3 illustrates a device controller.
FIG. 4 illustrates an example of a host memory controller and FIG. 5 illustrates an example of an order of storing and processing an instruction in a memory device.
FIG. 6 illustrates an example of transmitting a full result obtained by collecting partial results in a memory device to a host.
FIGS. 7 and 8 illustrate an example of a hierarchical structure of a memory device including three or more layers.
FIG. 9 illustrates an example of a method of operating a memory device.
FIGS. 10A to 10D illustrate an example of performing a neural network operation by a memory device.
FIGS. 11A to 11D illustrate an example of performing a sparse lengths sum (SLS) operation by a memory device.
FIG. 12 illustrates an example of execution of a deep learning recommendation model (DLRM) by a memory device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

Although terms, such as "first," "second," and "third", orA, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as being "connected to," "coupled to," or "joined to" another component or element, it may be directly (e.g., in contact with the other component or element) "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning. The use of the term "may" herein with respect to an example or embodiment, e.g., as to what an example or embodiment may include or implement, means that at least one example or embodiment exists where such a feature is included or implemented, while all examples are not limited thereto.

Unless otherwise defined, all terms used herein including technical or scientific terms have the same meanings as those generally understood consistent with and after an understanding of the present disclosure. Terms, such as those defined in commonly used dictionaries, should be construed to have meanings matching with contextual meanings in the relevant art and the present disclosure, and are not to be construed as an ideal or excessively formal meaning unless otherwise defined herein.

Hereinafter, examples will be described in detail with reference to the accompanying drawings. When describing the examples with reference to the accompanying drawings, like reference numerals refer to like components and a repeated description related thereto will be omitted.

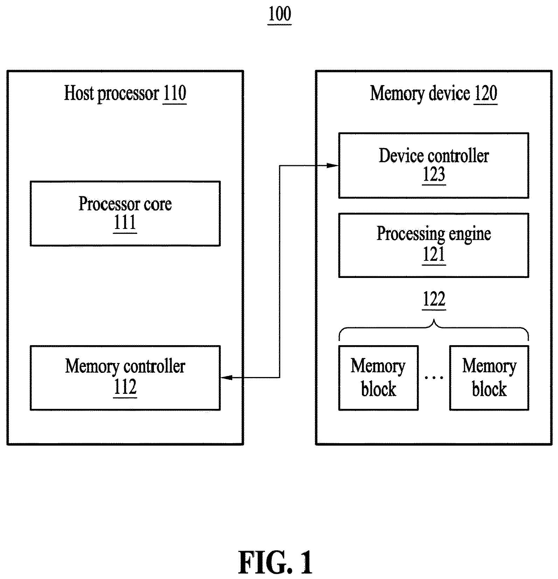

FIG. 1 illustrates an example of an electronic device.

An electronic device 100 may include a host processor 110, and a memory device 120.

A host may refer to a main management entity of a computer system (e.g., the electronic device 100), and may be implemented as the host processor 110 or as a server. For example, the host processor 110 may include a host central processing unit (CPU). For example, the host processor 110 may include a processor core 111 (e.g., one or more processors) and a memory controller 112. The memory controller 112 may control the memory device 120. The memory controller 112 may transmit a command to the memory device 120. For example, the host processor 110 may process data received from the memory device 120 using the processor core 111.

The memory device 120 may include a memory region to store data. The memory region may refer to a region (e.g., a physical region) to read and/or write data in a memory chip of the physical memory device 120. As will be described later in an example, the memory region may be disposed in a memory die (or a core die) of the memory device 120. The memory device 120 may process data of the memory region in cooperation with the host processor 110. For example, the memory device 120 may process data based on a command received from the host processor 110. The memory device 120 may control the memory region in response to a command of the host processor 110. The memory device 120 may be separated from the host processor 110. For reference, the host processor 110 may control overall operations and may instruct a device controller 123, an example of which will be described below, of the memory device 120 to control an operation implemented by acceleration (e.g., processing-in-memory (PIM) or processing-near-memory (PNM)).

The memory device 120 may include a processing engine 121, the device controller 123, and a memory (e.g., a plurality of memory blocks 122).

The memory may store data. The plurality of memory blocks 122 may be generated using some or all of memory chips of the memory device. Each memory block may correspond to a memory bank, and the plurality of memory blocks 122 may be grouped in units of memory ranks and/or in units of memory channels. For example, a memory rank may refer to a set of memory chips (e.g., dynamic random access memory (DRAM) chips) that are connected to the same chip selected to be simultaneously accessible. A memory channel may refer to a set of memory chips accessible via the same channel (e.g., memory channel).

Instructions may include instructions to execute operations of the host processor 110, the memory device 120, or processors in various devices, and/or operations of each component of a processor. For example, instructions (or programs) executable by the host processor 110 may be stored in another memory device, but the examples are not limited thereto. Here, instructions may be distinguished according to an operation instructed by a corresponding instruction and/or a layer in which a corresponding instruction is processed. For example, an instruction to request an access to an individual memory block of the memory device 120 may be referred to as a memory access instruction. An instruction indicating an operation using the processing engine 121 positioned in the memory device 120 may be referred to as a processing instruction. An instruction transmitted from the host processor 110 to the memory device 120 may be referred to as a host instruction. The host instruction may be divided into a host memory instruction and a host processing instruction. The host memory instruction may refer to an instruction of a host to request a normal access to a memory block. The host processing instruction may refer to an instruction representing processing requested to the memory device 120 by the host processor 110. An instruction produced (generated) by the memory device 120 from the host processing instruction may be referred to as a sub-processing instruction. The sub-processing instruction may be divided according to operation levels, and a first level instruction and a second level instruction will be mainly described herein. In one or more embodiments, the sub-processing instruction may be divided according to additional operation levels, such as a third level instruction, a fourth level instruction, etc., in addition to the first and second level instructions.

The device controller 123 may process a host instruction received from a host (e.g., the host processor 110). When several host instructions are received from the host, the device controller 123 may interpret the host instructions in a predetermined order. For example, the device controller 123 may produce a sub-processing instruction based on the host processing instruction received from the host. The device controller 123 may produce a low-level instruction by interpreting the host processing instruction or the sub-processing instruction. For example, the device controller 123 may produce a sub-processing instruction of a first operation level (hereinafter, referred to as a "first level instruction") from the host processing instruction received from the host. The first level instruction may be a low-level instruction of the host processing instruction. The device controller 123 may produce a sub-processing instruction of a second operation level (hereinafter, referred to as a "second level instruction") lower than the first operation level, from the first level instruction. The second level instruction may be a low-level instruction of the first level instruction.

The device controller 123 may transmit the produced sub-processing instruction to the processing engine 121. For example, the device controller 123 may distribute the produced low-level instructions to processing engines (e.g., a plurality of processing engines 121) corresponding to the low level (e.g., low-level processing engines). The device controller 123 may distribute the first level instruction to a processing engine corresponding to the first operation level (e.g., a first level processing engine) and may distribute the second level instruction to a processing engine corresponding to the second operation level (e.g., a second level processing engine). The device controller 123 may produce low-level instructions while designating the order of operations to be performed, and reproduced low-level instructions may be distributed to the low-level processing engines without changing the order. The device controller 123 may control the processing engine 121 to perform an operation based on the sub-processing instruction by transmitting the produced sub-processing instruction to the processing engine 121. For example, a sub-processing instruction of a lowest operation level (e.g., a lowest-level instruction) may be processed by a PIM engine (e.g., as one of the processing engines). The PIM engine may perform an operation indicated by the lowest-level instruction. However, the examples are not limited thereto, and when PNM engines of two or more levels are disposed only in a logic die according to the construction, the PNM engine may perform the operation indicated by the lowest-level instruction.

The device controller 123 may produce a total operation result by collecting results of operations performed by the low-level processing engines.

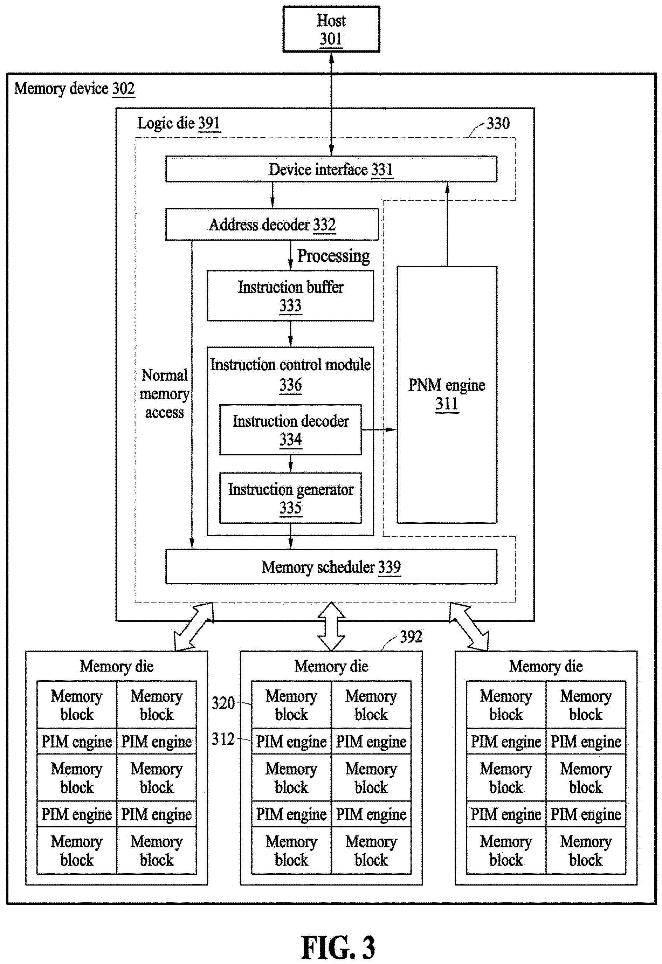

For example, the device controller 123 may receive the host processing instruction from the host. The device controller 123 may produce a sub-processing instruction to be used for an operation of the processing engine 121 based on the received host processing instruction. The device controller 123 may transmit the produced sub-processing instruction to the processing engine 121. The device controller 123 may also be referred to as a memory device controller, and an example of the device controller 123 will be described below with reference to FIG. 3.

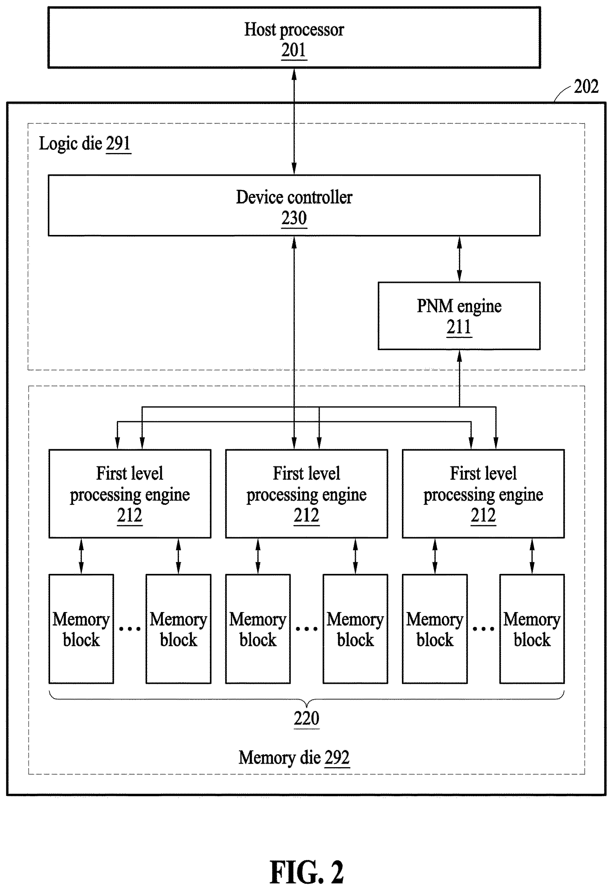

The processing engine 121 may perform an operation using data stored in a memory under the control of the device controller 123. For example, the processing engine 121 may perform an operation based on the sub-processing instruction produced by device controller 123 from the host processing instruction. A plurality of processing engines including the processing engine 121 may be hierarchically connected, and the operation of each processing engine may vary according to the corresponding operation level. An example of the hierarchical structure of the processing engines 121 will be described below with reference to FIG. 2.

However, the hierarchical structure of the processing engines is not limited to the foregoing, and the processing engines may be arranged in two or more layers. When the hierarchical structure includes two or more layers, the device controller 123 may directly produce a lowest-level instruction from the host processing instruction. Even when the hierarchical structure includes three or more layers, the operations of the device controller 123 and the processing engine 121 is not limited to always producing and processing the sub-processing instructions. When the host processing instruction is to be immediately processed, the device controller 123 may transmit the host processing instruction to the corresponding processing engine 121 (e.g., a highest-level processing engine). The highest-level processing engine may receive the host processing instruction from the device controller 123 and immediately perform an operation requested from the host.

For reference, one memory controller 112 is shown on the host side of FIG. 1. The host processor 110 may process data of a plurality of memory channels and a plurality of memory devices through the corresponding memory controller 112. However, the examples are not limited thereto, and the host processor 110 may include a plurality of memory controllers 112. The host processor 110 may process data of a plurality of memory channels and a plurality of memory devices 120 through the plurality of memory controllers 112. The topology of the mountable memory device 120 may vary according to the configuration of the host processor 110 and a board.

FIG. 2 illustrates a memory device.

A memory device 202 (e.g., the memory device 120 of FIG. 1) may process data. The memory device 202 may manage a memory region by processing data stored in the memory region. However, the examples are not limited thereto, and the memory device 202 may be implemented as a volatile memory device or a non-volatile memory device. The volatile memory device may be implemented as a dynamic random access memory (DRAM), a static random access memory (SRAM), a thyristor RAM (T-RAM), a zero capacitor RAM (Z-RAM), or a twin transistor RAM (TTRAM). The non-volatile memory device may be implemented as an electrically erasable programmable read-only memory (EEPROM), a flash memory, a magnetic random-access memory (MRAM), a spin-transfer torque (STT)-MRAM, a conductive bridging RAM (CBRAM), a ferroelectric RAM (FeRAM), a phase change RAM (PRAM), a resistive RAM (RRAM), a nanotube RRAM, a polymer RAM (PoRAM), a nano floating gate memory (NFGM), a holographic memory, a molecular electronic memory device, or an insulator resistance change memory.

The memory device 202 described above may include a device controller 230 (e.g., the device controller 123 of FIG. 1), processing engines (e.g., a plurality of the processing engine 121 of FIG. 1), and memory blocks (e.g., the memory blocks 122 of FIG. 1). For example, the memory device 202 may have a hierarchical operation structure, in which processing engines are hierarchically connected.

The memory device 202 may include a memory die 292 and a logic die 291. The memory die 292 may include a memory, and the logic die 291 may include the device controller 230. The memory may include a plurality of memory blocks 220. The logic die 291 may include a processing engine, an example of which will be described below. The memory die 292 may also include one or more processing engines. FIG. 2 shows an example in which the processing engine of the logic die 291 is a first processing engine (e.g., a PNM engine 211) and the memory die 292 includes a plurality of second processing engines (e.g., first level processing engines 212). The plurality of second processing engines may be located between memory blocks.

The processing engines may perform operations using data stored in memory regions (e.g., the memory blocks 220). The processing engines may perform operations between pieces of data (e.g., vectors or embedding vectors) read from the memory blocks 220 or operations between intermediate results.

The operations performed by the processing engines may include an arithmetic operation including at least one of comparison, adding, subtraction, multiplication, or dividing, a combination of two or more arithmetic operations (e.g., a multiplication and accumulation (MAC) operation), and a reduction operation. A reduction operation may be an operation that reduces a plurality of elements (e.g., values or vectors) to a single result (e.g., a single value or a single vector). The reduction operation may include, for example, an operation of gathering and adding each vector (e.g., an embedding vector) in an embedding table. However, the examples are not limited thereto, and the reduction operation may include finding a maximum value or minimum value of a plurality of elements, a sum or product of all elements, or a logical operation for all elements (e.g., logical AND, logical OR, XOR, NAND, NOR, orXNOR). Each operation may be performed independently by an individual processing engine, but is not limited thereto, and may be performed in cooperation with the plurality of processing engines.

For example, the processing engine may execute a computer-readable code (e.g., instructions) stored in a memory (e.g., the memory device 202 or another memory device) and processing instructions (e.g., the host processing instruction and the sub-processing instruction) from a processor (e.g., a host processor 201 and/or the device controller 230). The processor may be a hardware-implemented data processing apparatus having a circuit that is physically structured to execute desired operations. The desired operations may include, for example, codes or instructions included in a program.

The processing engines may include, for example, the PNM engine 211 and the first level processing engines 212.

The PNM engine 211 may be a processing engine that processes an operation according to a host processing instruction, and may be a processing engine corresponding to a highest operation level. The PNM engine 211 may be positioned in the logic die 291 (or a buffer die). The PNM may refer to a technique for extending and using an arithmetic function of the logic die 291 adjacent to the memory die 292. The PNM engine 211 may access a memory block 220 to perform an operation using a value recorded on a memory block 220, or may perform an operation using a partial result generated by another processing engine (e.g., a processing engine (e.g., a first level processing engine 212) that performs an operation of a lower level than the operation level of the PNM engine 211). The PNM engine 211 may perform an operation when an intermediate result generated by a PIM engine, an example of which will be described below, is obtained. The PNM engine 211 may generate an operation result by processing the obtained intermediate result.

For example, the PNM engine 211 may perform an operation based on a processing instruction (e.g., the host processing instruction) using data of the memory block 220. The PNM engine 211 may perform an operation indicated by the host processing instruction itself or an operation that integrates intermediate results of operations according to the first level instruction and/or the second level instruction divided from the host processing instruction. For example, the PNM engine 211 may be configured to perform at least one operation of comparison, adding, subtraction, multiplication, or dividing, MAC, or a reduction operation of the pieces of data.

The PNM engine 211 may generate a computation result (e.g., a final operation result) by performing an operation using intermediate results based on data stored in a memory block 220 among the plurality of memory blocks 220. The intermediate results may be generated from the operations according to the first level instruction and/or the second level instruction as described above. For example, the PNM engine 211 may generate a final computing result by processing (e.g., summing or adding) partial results output from the first level processing engines 212 of the low level. The PNM engine 211 may transmit the final computing result to the host processor 201 (e.g., the host processor 110 of FIG. 1).

The first level processing engine 212 may be a processing engine corresponding to the first operation level that is lower than the host processing instruction. The first level processing engines 212 may generate the intermediate results by performing operations according to the sub-processing instructions produced from the host processing instruction. For example, the intermediate results generated by the first level processing engines 212 may be transmitted to the PNM engine 211 corresponding to a higher level than the first level processing engines 212. FIG. 2 shows that the first level processing engines 212 are disposed in the memory die 292, however, this is merely an example and the first level processing engines 212 may also be disposed in the logic die 291.

In the example shown in FIG. 2, the first level processing engines 212 may be located in the memory die 292. Herein, a processing engine (e.g., a first level processing engine 212) located in the memory die 292 of the memory device may be referred to as a PIM engine. The PIM engine may be disposed between memory blocks in a memory module. For example, the PIM engine may be connected to adjacent memory blocks and may perform an operation using pieces of data of the adjacent memory blocks. When the first level processing engine 212 is a PIM engine, the first level processing engine 212 may generate partial results (e.g., intermediate results) by performing operations between pieces of data of the memory blocks 220 belonging to the same channel in the plurality of memory blocks 220. The first level processing engine 212 may be configured to perform, for example, at least one operation of comparison, adding, subtraction, multiplication, dividing, MAC, or a reduction operation of the pieces of data of the memory blocks.

As will be described later in an example, the device controller 230 may produce a sub-processing instruction (e.g., a lowest-level instruction), that may be processed by the PIM engine, from the host processing instruction received from the host. The PIM engine (e.g., the first level processing engine 212) may perform a simple operation indicated by the sub-processing instruction produced by the device controller 230. The PIM engine may perform a PIM operation according to the produced sub-processing instruction.

The PNM engine 211 and the first level processing engines 212 may be implemented in the memory device 202. FIG. 2 shows an example in which the PNM engine 211 and the first level processing engines 212 are implemented in the memory device 202. For example, the PNM engine 211 and the first level processing engines 212 may access the data stored in memory regions (e.g., the memory blocks 220) without using a main data bus between the host processor 201 and the memory device 202. The PNM engine 211 and the first level processing engines 212 may process data rapidly by processing pieces of data of several memory blocks 220 simultaneously and/or in parallel. Thus, by the rapid data processing, the memory device 202 of one or more embodiments may prevent data access latency with respect to the memory region and effectively reduce external bus traffic. Accordingly, by the data access latency prevention and the external bus traffic reduction, the memory device 202 of one or more embodiments may reduce the amount of computation of the host processor 201 and bandwidth usage between the host processor 201 and the memory device 202.

However, the classification of the processing engines is not limited to the above description, and the level of the operation corresponding to each processing engine may determine a hierarchical level, to which a corresponding processing engine belongs. A processing engine corresponding to an arbitrary operation level may perform an operation according to the corresponding operation level. The number and hierarchical structure of the operation levels are not limited to those shown in FIG. 2, and FIGS. 7 and 8 below show other implementation examples.

The device controller 230 may perform normal memory access (memory), and may process a processing instruction offloaded from the host. The device controller 230 may identify which one of the host memory instruction or the host processing instruction is included in a packet received from the host. The device controller 230 may directly transmit the host processing instruction to the processing engine (e.g., the PNM engine 211) or may transmit a sub-processing instruction produced from the host processing instruction to the processing engine (e.g., the first level processing engine 212). An example of the configuration and operation of the device controller 230 will be described below with reference to FIG. 3.

As described above, the plurality of memory blocks 220 (e.g., the memory blocks 122 of FIG. 1) may be a unit of a memory that stores data and may also be referred to as memory cells. The plurality of memory blocks 220 may be divided into rank units and channel units. Operations between the memory blocks 220 may be mainly performed by the first level processing engines 212, and operations between memory channels or between memory ranks may be performed by the PNM engine 211.

For reference, each component of the memory device 202 may be disposed in the logic die 291 and the memory die 292. FIG. 2 shows that the device controller 230 and the PNM engine 211 are disposed in the logic die 291, and the first level processing engines 212 and the memory blocks 220 are disposed in the memory die 292.

FIG. 3 illustrates a device controller.

A device controller 330 (e.g., the device controller 230 of FIG. 2) may process packets received from a host 301 (e.g., the host processor 201 of FIG. 2) and control processing engines according to corresponding operation levels. The device controller 330 may control each processing engine to perform a PIM operation or a PNM operation. The device controller 330 may be implemented as an assembly of circuit components (e.g., logic circuits). The device controller 330 may include, for example, a device interface 331, an address decoder 332, an instruction buffer 333, an instruction control module 336, and a memory scheduler 339. Each of the components of the device controller 330 described above may also be implemented as an assembly of circuit components.

The device interface 331 may receive a packet from the host 301. The device interface 331 may transmit the received packet to the address decoder 332. The device interface 331 may include a port for receiving a signal (e.g., a packet) from the host 301, a logic circuit for interpreting the received signal, and a physical wire.

The address decoder 332 may identify a request indicated by the received packet. For example, the address decoder 332 may identify the packet as indicating either a normal memory access request or a processing request. The address decoder 332 may identify a request indicated by the packet based on an access address of the packet. The address decoder 332 may identify whether the received packet indicates the memory access request or the processing request based on the access address of the received packet. A reserved address region for a host processing instruction may be defined in the memory device 302. When a packet accessing the reserved address region of the memory device 302 is received, the address decoder 332 may determine that the corresponding packet indicates the processing request. When a packet accessing other regions of the memory device 302 is received, the address decoder 332 may determine that the corresponding packet indicates the memory access request. As will be described later in an example, the access address may be a unique address of an entry designating the order of operations in an instruction buffer.

When the address decoder 332 identifies the packet as indicating the memory access request, the device controller 330 may perform a normal memory access operation. For example, the device controller 330 may access data stored in a memory block through the memory scheduler 339. For reference, the memory access operation through the memory scheduler 339 may be performed in an out-of-order mode.

When the address decoder 332 identifies the packet as indicating the processing request, the device controller 330 (e.g., the address decoder 332) may transmit the corresponding request to the instruction buffer 333.

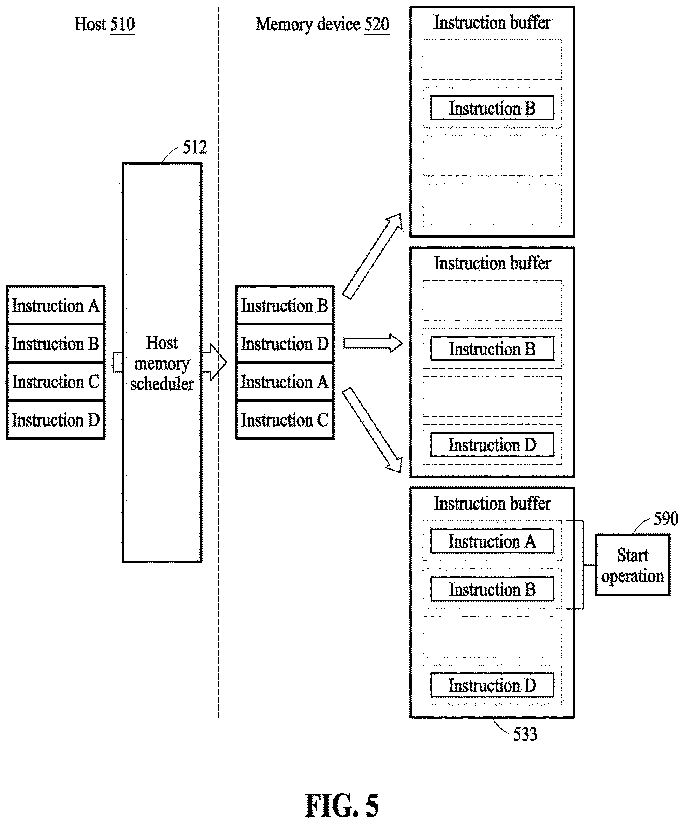

When the address decoder 332 identifies the packet described above as indicating the processing request, the instruction buffer 333 may store host processing instructions in the order designated by the host 301. For example, the instruction buffer 333 may be a reserved address region for host processing instructions among the memory regions of the memory device 302. The instruction buffer 333 may store instructions according to the order designated by the host 301. According to an example, the order of the host processing instructions may be determined based on an address according to a definition (e.g., a protocol) between the host 301 and the memory device 302. A unique address may be allocated for each entry of the instruction buffer 333, and each entry may be defined for each operation order. For example, the operation order may be respectively predefined for each address (e.g., each entry) within an address range corresponding to the reserved address region. The host 301 may sequentially allocate addresses for the host processing instructions in the reserved address region according to the operation order to be processed. For example, the addresses of the host processing instructions may be allocated in ascending order according to the operation order. A k-th address Addr_k in the reserved address region may be defined as a k-th operation order, and a (k+1)-th address Addr_k+1 may be defined as a (k+1)-th operation order. k may be an integer of 1 or more. The instruction buffer 333 may sequentially transmit the host processing instructions to an instruction decoder 334 according to the order based on the access addresses of the host processing instructions. An example of the operation of the instruction buffer 333 will be described below with reference to FIG. 5.

The instruction control module 336 may control decoding and generation of processing instructions. The instruction control module 336 may transmit a processing instruction to a processing engine (e.g., a PNM engine 311) corresponding to an operation level corresponding to the instruction control module, and/or produce a sub-processing instruction for a processing engine (e.g., a PIM engine 312) of a low operation level. For example, the instruction control module 336 may include the instruction decoder 334 and an instruction generator 335. FIG. 3 shows an example in which the instruction control module 336 controls the decoding and generation of host processing instructions.

The instruction decoder 334 may transmit the received processing instruction to at least one of a processing engine (e.g., the PNM engine 311) of the operation level corresponding to the instruction decoder, or the instruction generator 335. The instruction decoder 334 for each operation level may identify operations to be processed in the corresponding operation level. For example, the instruction decoder 334 may determine whether to process the received processing instruction at an operation level corresponding to the instruction decoder 334, based on an operation identification code (e.g., OPCODE) of the received processing instruction. The instruction decoder 334 of an arbitrary operation level may have an operation identification code pre-stored for the corresponding operation level to determine to process the received processing instruction at the corresponding operation level, when the pre-stored operation identification code matches the operation identification code of the received processing instruction. The instruction decoder 334 may determine to process the received processing instruction at the next operation level (e.g., the low operation level) when the received processing instruction does not match the pre-stored operation identification code.

FIG. 3 shows an example in which the instruction decoder 334 receives the host processing instruction from the instruction buffer 333. The instruction decoder 334 may transmit an operation corresponding to the host processing instruction to at least one of the PNM engine 311 or the instruction generator 335. The instruction decoder 334 may analyze the received host processing instruction and determine whether to control the PNM engine 311 to perform the operation corresponding to the host processing instruction.

When the pre-stored operation identification code for the operation level corresponding to the instruction decoder 334 matches the host processing instruction (e.g., matches the operation identification code of the host processing instruction), the instruction decoder 334 may transmit the host processing instruction to the PNM engine 311. When the host processing instruction matches the pre-stored operation identification code, the instruction decoder 334 may control the PNM engine 311 to perform the operation according to the host processing instruction by transmitting the host processing instruction to the PNM engine 311.

When the host processing instruction does not match the pre-stored operation identification code, the instruction decoder 334 may transmit the host processing instruction to the instruction generator 335 such that the instruction generator 335 produces a sub-processing instruction for a low level (e.g., the first level instruction). For reference, even when the host processing instruction does not match the pre-stored operation identification code, the instruction decoder 334 may transmit the host processing instruction to the PNM engine 311 as well as the instruction generator 335. When the instruction decoder 334 transmits the host processing instruction to the PNM engine 311 and the instruction generator 335, the PNM engine 311 may not perform the entire operation indicated by the host processing instruction, but may be predefined and/or constructed such that the PNM engine 311 performs an operation that integrates intermediate results among the entire operation. As will be described later in an example, the PNM engine 311 may, when the PIM engines 312 generate intermediate results, receive the intermediate results, integrate the intermediate results, and generate a final result.

Here, an operation level may be referred to as a level, and a processing instruction of a highest level may be a host processing instruction. The first level may refer to an operation level of a lower layer than the operation level of the host processing instruction. FIG. 3 shows the PIM engine 312 as a processing engine corresponding to the first level. However, the examples are not limited thereto, and for example, when the operation level is divided into three or more levels, the operation level may be divided into a highest level corresponding to the host processing instruction, a first level that is lower than the highest level, and a second level (e.g., a lowest level) that is lower than the first level. In such a case, an additional PNM engine may be provided as a processing engine corresponding to the first level, and the PIM engine 312 may correspond to the second level. However, the division of operation levels is not limited thereto, and the operation level may be divided according to the position of a processing engine by which an operation is performed. For example, a level of an operation performed by a processing engine positioned in a logic die 391 may be expressed as a near-memory level, and a level of an operation performed by a processing engine positioned in a memory die 392 may be expressed as an in-memory level.

FIG. 3 may show the instruction decoder 334 corresponding to the near-memory level. For example, the instruction decoder 334 corresponding to the near-memory level may determine whether an operation corresponding to the host processing instruction is to be processed by the PNM engine 311. When the instruction decoder 334 determines the operation corresponding to the host processing instruction is to be processed by the PNM engine 311, the instruction decoder 334 may transmit the host processing instruction to the PNM engine 311. As described above, when the host processing instruction matches the pre-stored operation identification code, the instruction decoder 334 may determine that the operation corresponding to the host processing instruction is to be performed by the PNM engine 311 and may transmit the host processing instruction to the PNM engine 311. On the other hand, when the host processing instruction does not match the pre-stored operation identification code, the instruction decoder 334 may transmit the host processing instruction to the instruction generator 335. As will be described later in an example, the instruction generator 335 may produce a sub-processing instruction of a low level (e.g., the in-memory level) from the host processing instruction.

The instruction generator 335 may produce the sub-processing instruction from the received host processing instruction and transmit the produced sub-processing instruction to the memory scheduler 339. An operation corresponding to an arbitrary operation level may be decomposed into and/or interpreted as a set of sub-operations corresponding to a lower level than the above operation level. The sub-operation may refer to an operation according to a sub-processing instruction. For example, the instruction generator 335 may produce a low-level processing instruction from a high-level processing instruction. For example, the instruction generator 335 may produce a sub-processing instruction indicating an operation that may be performed by a processing engine at the in-memory level according to instruction information (e.g., a set of instructions). The produced sub-processing instruction may be transmitted to one or more processing engines (e.g., one or more PIM engines 312).

For example, the instruction generator 335 may have a predefined instruction table and may include an assembly of logic circuits. The instruction generator 335 may produce a sub-processing instruction according to a matching result between the instruction table and the transmitted processing instruction. The instruction table may be a table in which sub-operations to be performed for an operation corresponding to predetermined instruction information are predefined. For example, the instruction table may include pre-stored instruction information and sub-processing instructions to be produced from the instruction information. The instruction information may be a combination of instructions. The instruction generator 335 may search for pre-stored instruction information that matches instruction information transmitted from the instruction decoder 334 in the instruction table, and produce and transmit a sub-processing instruction mapped to the searched instruction information. For example, when the host processing instruction is a sparse lengths sum (SLS) operation or a MAC operation, the instruction generator 335 may produce a sub-processing instruction for a corresponding operation. For example, when the host processing instruction is the SLS operation, the instruction generator 335 may produce a sub-processing instruction for the SLS operation, and when the host processing instruction is the MAC operation, the instruction generator 335 may produce a sub-processing instruction for the MAC operation.

According to an example, the instruction generator 335 may produce a sub-processing instruction including an operation code and an access address (e.g., a destination address).

The operation codes may be defined according to rules for each instruction stored in the instruction table. For example, when the host processing instruction is an SLS operation, each of the sub-processing instructions may include a read (e.g., READ) instruction, and the instruction generator 335 may repeatedly produce read instructions for the SLS operation. In another example, when the host processing instruction is a MAC operation, a second level instruction of the sub-processing instructions may include a combination of a read (e.g., READ) operation and a dot product (e.g., DOT) operation, and a first level instruction may include a summation operation of intermediate results.

The access address included in the first level instruction may be produced by splicing an address region included in the host processing instruction at regular intervals. For example, when the host processing instruction is an SLS operation, the interval of the address region to be sliced may be determined based on a vector size. In another example, when the host processing instruction is a MAC operation, the access address to be included in each of first level instructions may be produced by slicing the address region in units of a maximum size readable by the processing engine for performing the operation of the first operation level or a size preset by a user.

The memory scheduler 339 may adjust the order of instructions to be transmitted. The memory scheduler 339 may transmit instructions in an in-order mode or out-of-order mode. When a normal memory access request for the memory blocks 320 is received from the host 301, the memory scheduler 339 may schedule the access by processing the host memory instructions in the out-of-order mode. When a host processing instruction request is received from the host 301, the memory scheduler 339 may schedule the access to the memory blocks 320 by processing the host processing instructions in the in-order mode. The memory scheduler 339 may process sub-processing instructions produced by the instruction generator 335 described above in the in-order mode.

The processing engine of each operation level may perform the operation of a corresponding operation level. Each processing engine may perform an operation according to the host processing instruction transmitted through the instruction control module 336 (e.g., the instruction decoder 334) or the memory scheduler 339 of a corresponding operation level. For example, a low-level processing engine (e.g., the PIM engine 312) may transmit a result of performing an operation to a high-level processing engine (e.g., the PNM engine 311). The high-level processing engine may wait until intermediate results for performing a given operation (e.g., results of performing operations by the low-level processing engine) are collected. When the intermediate results are collected, the highest-level processing engine (e.g., the PNM engine 311) may perform an operation (e.g., an operation of integrating the intermediate results) according to the host processing instruction given to the highest-level processing engine.

In FIG. 3, for example, a processing engine of an in-memory level (e.g., the PIM engine 312) may perform an operation (e.g., a processing operation) according to the transmitted sub-processing instruction. The PIM engine 312 may transmit a result of performing the operation to a processing engine of a near-memory level (e.g., the PNM engine 311). The processing engine of the near-memory level (e.g., the PNM engine 311) may perform an operation according to the transmitted host processing instruction. When a low-level operation result is not to be used for the operation, the PNM engine 311 may perform an operation by directly reading data (e.g., a value) for the operation from a memory block. When the low-level operation result is to be used for the operation, the PNM engine 311 may wait until all the low-level operation results to be used for the operation are transmitted. When all the low-level operation results (e.g., the intermediate results) are obtained, the PNM engine 311 may perform the operation corresponding to given instruction information.

When the operation according to the host processing instruction is completed, the memory device 302 may transmit the entire operation result to the host 301. The device controller 330 may transmit a final operation result of the operation produced by a highest-level processing engine (e.g., the PNM engine 311) among the plurality of processing engines to the host 301.

As described above, the device controller 330 of the memory device 302 of one or more embodiments may produce simple sub-processing instructions from a host processing instruction received from the host 301. Therefore, even when the host processing instruction transmitted from the host 301 indicates a complicated operation, the memory device 302 of one or more embodiments may autonomously decompose the host processing instruction into small sub-processing instructions and offload them. Thus, the memory device 302 of one or more embodiments may minimize processing resources of the host 301 and communication between the host 301 and the memory device 302.

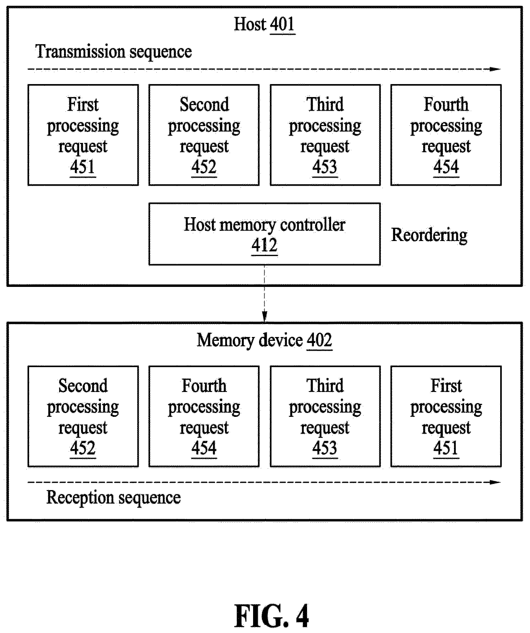

FIG. 4 illustrates an example of a host memory controller and FIG. 5 illustrates an example of an order of storing and processing an instruction in a memory device.

According to an example, a transmission sequence of a host processing instruction by a host 401 may be different from a reception sequence thereof by a memory device 402. The transmission sequence and the reception sequence of the host processing instruction may be different due to a memory interface for instruction transmission between the host 401 and the memory device 402. The memory interface may be controlled by a memory controller (e.g., a host a host memory controller 412) of the host 401. The host memory controller 412 may change or reorder the order of packets to be transmitted for efficient memory access. For example, as shown in FIG. 4, the transmission sequence may initially be a sequence of a first processing request 451, a second processing request 452, a third processing request 453, and a fourth processing request 454. However, when the sequence of the host processing instructions is changed by the host memory controller 412 as described above, the memory device 402 may receive the host processing instructions in a reception sequence of the second processing request 452, the fourth processing request 454, the third processing request 453, and the first processing request 451.

Despite the change of the order of host processing instructions by the host memory controller 412 as described above, the memory device 402 according to an example may determine the intended order of operations of the host processing instructions based on an access address, an example of which will be described below with reference to FIG. 5. The memory device 402 of one or more embodiments may perform a normal arithmetic operation without being involved in the operation of the host memory controller 412, thereby minimizing processing resources of the host 401 and communication between the host 401 and the memory device 402.

As shown in FIG. 5, in operation 590, a memory device 520 according to an example may start an operation corresponding to some host processing instructions, even when the transmission of all host processing instructions from a host 510 is not completed. For example, an instruction buffer of the memory device 520 may write the host processing instructions received from the host 510 and record the host processing instructions in the order based on the access addresses.

When a packet received from the host 510 is identified as indicating host processing instructions (e.g., Instruction A, Instruction B, Instruction C, and Instruction D), an instruction buffer 533 according to an example may store the host processing instructions in an order designated by the host 510. For example, the instruction buffer 533 may record the host processing instructions in entries (e.g., queue positions) according to the order determined by the host 510. The instruction buffer 533 may store the host processing instructions in the order based on addresses. A host processing instruction allocated with a low address may be stored in a preceding queue position of a host processing instruction allocated with a high address in the instruction buffer 533. Accordingly, the instruction buffer 533 may determine an access address of the host processing instruction to the instruction buffer 533 according to the operation order, and the queue position stored in the instruction buffer 533 may be determined according to the address of the host processing instruction. Accordingly, even when the order of the host processing instructions designated by the host 510 (e.g., an order of instruction A, Instruction B, Instruction C, and Instruction D) is different from a reception sequence of the host processing instructions by the memory device 520 (e.g., a sequence of Instruction B, Instruction D, instruction A, and Instruction C), the instruction buffer 533 may record the host processing instructions in the entries (e.g., the queue positions) according to the order determined by the host 510, based on the access addresses of the host processing instructions.

The instruction buffer 533 may transmit the host processing instructions to an instruction decoder according to the stored order. The instruction buffer 533 may store the host processing instructions in the address order as described above, rather than in the order (e.g., the reception sequence) of the host processing instructions received. Accordingly, even when a memory controller of a host processor transmits the host processing instructions in an order different from the operation order, the memory device 520 of one or more embodiments may ensure the operation order by storing and processing the host processing instructions based on the address order.

When a host processing instruction of the order (in which the operation is to be processed) is stored, the instruction buffer 533 may transmit the corresponding host processing instruction first to the instruction decoder. An entry (e.g., a queue position) of the order, in which the operation is to be processed, may be indicated by an instruction counter. The instruction counter may be a counter that indicates addresses within the instruction buffer 533, and may indicate a queue position corresponding to the order, in which the operation is to be processed. For example, the instruction buffer 533 may traverse and increment the instruction counter. The incrementing of the instruction counter may refer to a change of a value of the instruction counter to indicate an address of a position next to a queue position currently indicated by the instruction counter.

When a host processing instruction is stored in an entry (e.g., a queue position) indicated by the instruction counter, the instruction buffer 533 may transmit the stored host processing instruction to the instruction decoder. When the queue position indicated by the instruction counter is valid, the instruction buffer 533 may transmit the host processing instruction at the valid queue position to the instruction decoder. When an host processing instruction is stored in the queue position indicated by the instruction counter, the device controller may determine that the corresponding queue position is valid. In response to transmitting the host processing instruction, the instruction buffer 533 may mark the queue position (from which the host processing instruction is transmitted) as invalid, and increment the instruction counter. For example, when the next address is valid again (e.g., when a host processing instruction is stored in the next address), the instruction buffer 533 may transmit the corresponding host processing instruction to the instruction decoder and increment the instruction counter again. In another example, when the next address is invalid, the instruction buffer 533 may wait until a host processing instruction is received. An invalid address may refer to, for example, an empty queue position with no host processing instructions. The instruction buffer 533 may increment the instruction counter until it indicates a final portion (e.g., a final entry) of the reserved address region. In a case of transmitting a host processing instruction stored in the final portion, the instruction buffer 533 may traverse the instruction counter by initializing the instruction counter such that the instruction counter indicates a first portion (e.g., a first entry).

Referring to FIG. 5, an example of a transmission sequence of processing requests intended by the host 510 may be in the order of a host processing instruction A, a host processing instruction B, a host processing instruction C, and a host processing instruction D. Despite the transmission sequence intended by the host 510, a host memory scheduler 512 may transmit processing requests to the memory device 520 in the order of the host processing instruction B, the host processing instruction D, the host processing instruction A, and the host processing instruction C. As described above, the operation order for each access address to the instruction buffer 533 may be predefined between the host 510 and the memory device 520, and the access address of each host processing instruction may be set by the host 510. When the host processing instruction B is received, the memory device 520 may store the host processing instruction B in an entry (e.g., a second entry in the instruction buffer 533 of FIG. 5) of an order corresponding to an access address of the host processing instruction B in the instruction buffer 533. Similarly, when the host processing instruction D is received, the instruction buffer 533 may store the host processing instruction D in an entry (e.g., a fourth entry in the instruction buffer 533 of FIG. 5) of an order corresponding to an access address of the host processing instruction D. Similarly, when the host processing instruction A is received, the instruction buffer 533 may store the host processing instruction A in an entry (e.g., a first entry in the instruction buffer 533 of FIG. 5) of an order corresponding to an access address of the host processing instruction A. When the instruction counter indicates the first entry, the instruction buffer 533 may continue recording the host processing instructions until the host processing instruction (e.g., the host processing instruction A of FIG. 5) is stored in the first entry.

In FIG. 5, when the host processing instruction A is stored in the first entry, it may be determined that the entry indicated by the instruction counter is valid. The instruction buffer 533 may transmit the host processing instructions sequentially stored according to the operation order to the instruction decoder. In FIG. 5, the instruction buffer 533 may first transmit the host processing instruction A to the instruction decoder and increment the instruction counter. Then, the instruction counter indicates the second entry, and the instruction buffer 533 may transmit the host processing instruction B to the instruction decoder, when the host processing instruction B is stored in the second entry. When the instruction buffer 533 increments the instruction counter, the instruction counter may indicate the third entry. When the third entry is empty, the instruction buffer 533 may continue recording the host processing instructions until the host processing instruction corresponding to the third entry (e.g., the host processing instruction C of FIG. 5) is stored. Accordingly, in operation 590, the memory device 520 may start the operation, even when the host processing instructions are not stored in all entries (e.g., all queue positions) in the instruction buffer 533 or all host processing instructions for an arbitrary operation are not received.

As described above, the memory device 520 of one or more embodiments may determine the order intended by the host 510 for the processing requests without a periodic polling operation or fence operation (e.g., delay) for monitoring whether an operation has been performed. Therefore, unlike a typical memory device in which a polling operation or a fence operation is performed to ensure the order of processing requests, the overhead in the memory device 520 of one or more embodiments may also be prevented by determining the order without the polling operation or the fence operation.

In addition, the operation order of sub-processing instructions corresponding to the first operation level, that are decomposed from the host processing instruction, may be determined by an instruction generator (e.g., the instruction generator 335 of FIG. 3). A memory scheduler (e.g., the memory scheduler 339 of FIG. 3) of the memory device 520 may transmit the sub-processing instructions in the in-order mode according to the order designated by the instruction generator to corresponding processing engines (e.g., PIM engines). Accordingly, the memory device 520 of one or more embodiments may reduce the cost for maintaining the execution order of instructions, compared to the typical memory device.

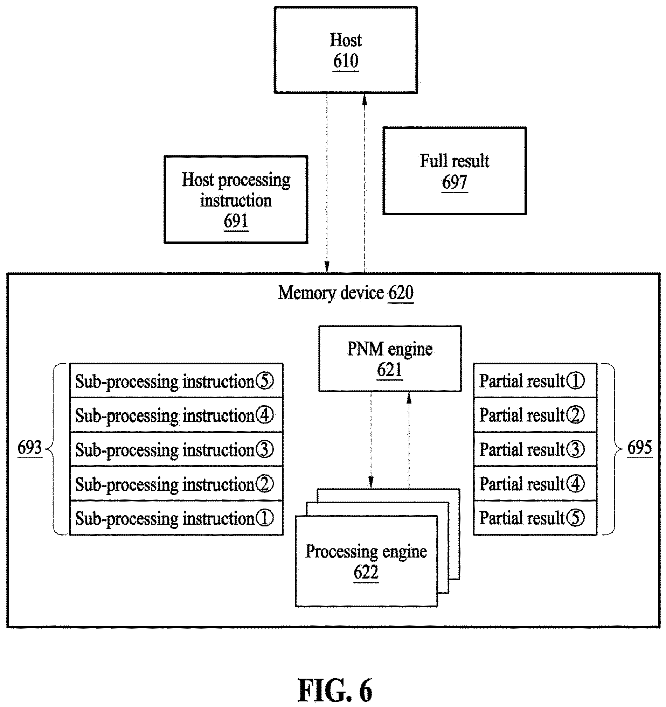

FIG. 6 illustrates an example of transmitting a full result obtained by collecting partial results in a memory device to a host.

A device controller of a memory device 620 according to an example may receive a host processing instruction 691 from a host 610, and transmit a final operation result (e.g., a full result 697), generated according to a series of operations corresponding to the host processing instruction 691, to the host 610. For example, as shown in FIG. 6, the memory device 620 may receive the host processing instruction 691 from the host 610. The device controller (e.g., an instruction generator of the device controller) may produce a plurality of sub-processing instructions 693 from the host processing instruction 691. The device controller (e.g., a memory scheduler of the device controller) may transmit the plurality of sub-processing instructions 693 to processing engines 622. In FIG. 6, the processing engines 622 may be PIM engines. The plurality of processing engines 622 may generate partial results 695 by individually performing operations corresponding to the plurality of sub-processing instructions 693. The plurality of processing engines 622 may transmit the plurality of partial results 695 to a PNM engine 621. For reference, although FIG. 6 shows that the plurality of sub-processing instructions 693 and the partial results 695 are transmitted and processed sequentially, this is merely for convenience of illustration, and the transmission of the sub-processing instructions 693, the execution of operations based on the sub-processing instructions 693, and the generation of the partial results 695 may be performed in parallel. The PNM engine 621 may generate a full result 697 (e.g., the final operation result) using the obtained partial results 695. The memory device 620 may transmit the full result 697 to the host 610.

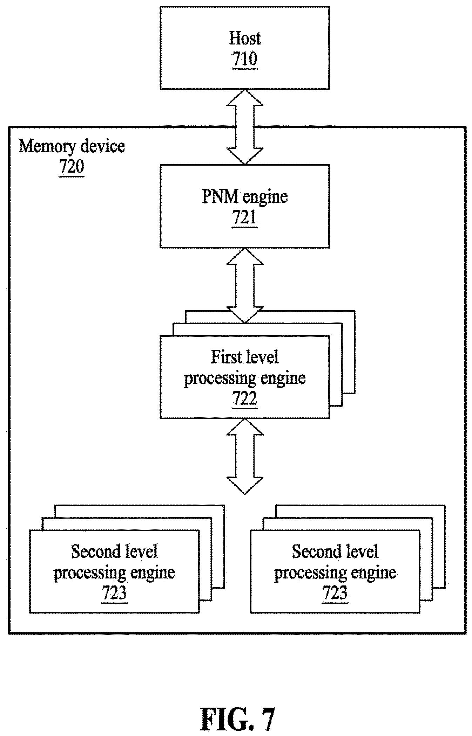

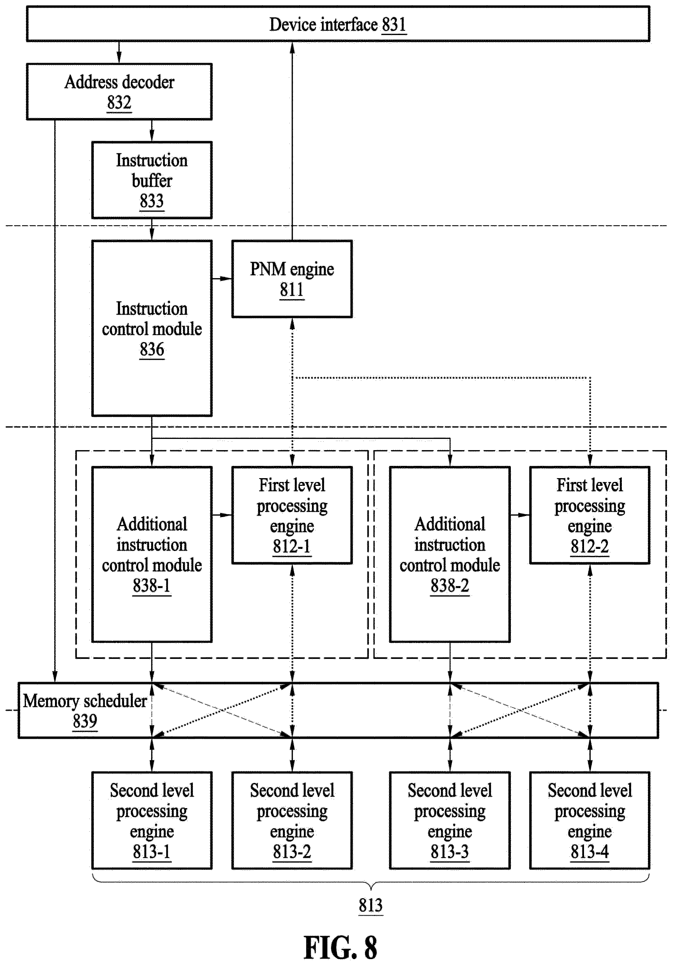

FIGS. 7 and 8 illustrate an example of a hierarchical structure of a memory device including three or more layers.

A memory device 720 which is an example shown in FIG. 7 may include processing engines arranged in a hierarchical structure of three or more layers. For example, the memory device 720 may receive a host processing instruction from a host 710 and produce sub-processing instructions (e.g., a first level instruction and a second level instruction) by decomposing the received host processing instruction. Second level processing engines 723 of the memory device 720 may generate partial results by performing operations according to second level instructions. Each of first level processing engines 722 may process the partial results and generate an intermediate result by performing an operation according to a first level instruction. The first level instruction may be an instruction of a higher operation level than the second level instruction. For example, each of the first level processing engines 722 may obtain partial results of the second level processing engines 723 connected to a corresponding first level processing engine, and may generate an intermediate result by performing the operation according to the first level instruction using the obtained partial results. A PNM engine 721 may obtain intermediate results generated by the first level processing engines 722, and generate a final operation result by performing the operation using the intermediate results. The memory device 720 may transmit the final operation result to the host 710.

The PNM engine 721 configured to generate the operation result and a device controller may be disposed in a logic die of the memory device 720. In addition, the first level processing engines 722 (e.g., additional PNM engines) corresponding to an intermediate operation level, which receive PIM operation results and generate intermediate results, may be additionally disposed in the logic die. Therefore, the processing engines may be disposed even in the logic die in a hierarchical structure. Memory blocks for storing data and the second level processing engines 723 (e.g., PIM engines) for generating PIM operation results may be disposed in a memory die of the memory device 720. The device controller may parallelize processing instructions received from the host 710 into sub-processing instructions of small units and distribute the sub-processing instructions to the first level processing engines 722 corresponding to the first operation level. Components corresponding to the first operation level may parallelize instructions of the first operation level into smaller units and distribute the parallelized instructions to the second level processing engines 723 corresponding to the second operation level. Partial operation results obtained by the low-level processing engines may be integrally processed by a high-level processing engine.

For reference, the hierarchical structure is not limited to the structure described above. The hierarchical structure of the memory device 720 may have more levels than the structure described above, and the number of levels is not limited. The operation level may be divided into a plurality of levels, and the memory device 720 may include instruction decoders corresponding to the plurality of operation levels, respectively. The instruction decoder corresponding to each operation level may determine whether the received processing instruction is to be processed at the corresponding operation level. For example, an instruction decoder corresponding to the first operation level may determine whether the processing instruction indicates an operation to be processed at the first operation level or an operation to be transmitted to the next operation level (e.g., the second operation level).

For example, FIG. 8 shows an example in which a device controller includes an instruction decoder and an instruction generator for three operation levels. A device interface 831, an address decoder 832, an instruction buffer 833, and a memory scheduler 839 may operate in the same or similar manner as the device interface 331, the address decoder 332, the instruction buffer 333, and the memory scheduler 339 described above with reference to FIG. 3, and therefore, the description thereof will not be provided here.

An instruction control module 836 may process a processing instruction obtained through the instruction buffer 833. Herein, the example of the instruction control module 836 including the instruction decoder and the instruction generator is mainly described, however, the examples are not limited thereto, and the configuration of the instruction control module 836 may vary according to the construction. For reference, a PNM engine 811 is connected adjacent to a host and uses the existing memory interface as it is. Accordingly, the address decoder 832 and the instruction buffer 833 may be connected to the instruction control module 836 (e.g., the instruction decoder 334 of FIG. 3) for the PNM engine 811.

For example, when a host processing instruction may be implemented without a sub-operation, the instruction control module 836 (e.g., the instruction decoder 334 of FIG. 3) may control the execution of an operation based on the host processing instruction by transmitting the host processing instruction to the PNM engine 811.

In another example, when a host processing instruction is to be implemented up to a sub-operation, the instruction control module 836 (e.g., the instruction generator 335 of FIG. 3) may produce a sub-processing instruction (e.g., the first level instruction) from the host processing instruction. The instruction control module 836 may store an instruction table for the first operation level, and produce sub-processing instructions of the first level (e.g., first level instructions) based on information matching the host processing instruction from the corresponding instruction table. The instruction control module 836 may transmit the sub-processing instructions of the first level to additional instruction control modules 838-1 and 838-2 corresponding to a lower level. For example the instruction control module 836 may transmit a first sub-processing instruction of the first level to the control module 838-1 and transmit a second sub-processing instruction of the first level to the control module 838-2.

The PNM engine 811 may generate new data (e.g., a final operation result) by merging and/or processing data stored in a memory block or partial operation results obtained by processing engines 812-1 and 812-2 of a lower level of the PNM engine 811 (e.g., the first level or the second level).

For example, a respective instruction control module (e.g., including a respective instruction decoder and instruction generator) may be included for each of the processing engines 811, 812-1, and 812-2 of levels except for the lowest level. For example, the processing engines may be connected to each other in a tree structure, and the instruction control modules of a higher level may be connected to the instruction control modules of a lower level in a tree structure. An instruction control module of an arbitrary level may be connected to one processing engine at the corresponding level. For example, the instruction control module 836 may be connected to the additional instruction control modules 838-1 and 838-2.

The additional instruction control module 838-1 may be connected to the first level processing engine 812-1. The additional instruction control module 838-2 may be connected to the first level processing engine 812-2. The sub-processing instructions produced by the additional instruction control modules 838-1 and 838-2 may be transmitted through the memory scheduler 839 and may be paired with corresponding processing engines, respectively. For example, a sub-processing instruction produced by the additional instruction control module 838-1 may be transmitted to second level processing engines 813-1 and 813-2 paired with the corresponding additional instruction control module 838-1 through the memory scheduler 839. Similarly, a sub-processing instruction produced by the additional instruction control module 838-2 may be transmitted to second level processing engines 813-3 and 813-4 paired with the corresponding additional instruction control module 838-2 through the memory scheduler 839.

An intermediate result generated based on the second level processing engines 813-1 and 813-2 may be transmitted to the first level processing engine 812-1, and an intermediate result generated based on the second level processing engines 813-3 and 813-4 may be transmitted to the first level processing engine 812-2. Hereinafter, the operations of the additional instruction control module 838-1, the first level processing engine 812-1, and the second level processing engines 813-1 and 813-2 will be mainly described as an example.

The additional instruction control modules 838-1 and 838-2 may each process sub-processing instructions of the first level obtained from the instruction control module 836. For example, when an operation of the first level is to be performed, the additional instruction control modules 838-1 and 838-2 may transmit the sub-processing instructions of the first level (e.g., the first level instructions) to the first level processing engines 812-1 and 812-2. The device controller may transmit the first level instructions to additional PNM engines (e.g., the first level processing engines 812-1 and 812-2). In another example, when an operation of the second level is also to be performed, the additional instruction control modules 838-1 and 838-2 may produce second level instructions from the first level instructions.

The additional instruction control modules 838-1 and 838-2 may store an instruction table for the second operation level and produce second level instructions based on information matching the first level instructions from the corresponding instruction table. The device controller may transmit the second level instructions to the PIM engines (e.g., the second level processing engines 813) through the memory scheduler 839. For reference, the additional instruction control module 838-1 may transmit the second level instructions to the second level processing engines 813-1 and 813-2 paired with the additional instruction control module 838-1. The memory scheduler 839 may control the order of transmitting the sub-processing instructions (e.g., the second level instructions).

The first level processing engines 812-1 and 812-2 may generate new data (e.g., intermediate results) by merging and/or processing data stored in a memory block or partial operation results obtained by processing engines of a lower level of the first level (e.g., the second level). The additional PNM engines (e.g., the first level processing engines 812-1 and 812-2) may perform PNM operations according to the produced sub-processing instructions (e.g., the first level instructions). The first level processing engines 812-1 and 812-2 may transmit the intermediate results to the processing engine (e.g., the PNM engine 811) of a higher level than the first level. For reference, the first level processing engines 812-1 and 812-2 may receive instructions from the instruction control modules (e.g., instruction decoders) connected to the first level processing engines 812-1 and 812-2, and may transmit operation results or receive operation results to and from processing engines connected to the first level processing engines 812-1 and 812-2. For example, the first level processing engine 812-1 may receive an instruction from the additional instruction control module 838-1, transmit an intermediate operation result to the PNM engine 811, and receive the intermediate operation result from the second level processing engines 813-1 and 813-2.

The second level processing engines 813 may receive sub-processing instructions (e.g., the second level instructions) produced by the additional instruction control modules 838-1 and 838-2 through the memory scheduler 839, and perform micro-operations (e.g., PIM operations). Partial operation results of the second level processing engines 813 may be transmitted to the processing engines of the higher level (e.g., the PNM engine 811 and/or the first level processing engines 812-1 and 812-2).

FIGS. 7 and 8 show the example of three operation levels for convenience of description, however, the examples are not limited thereto.

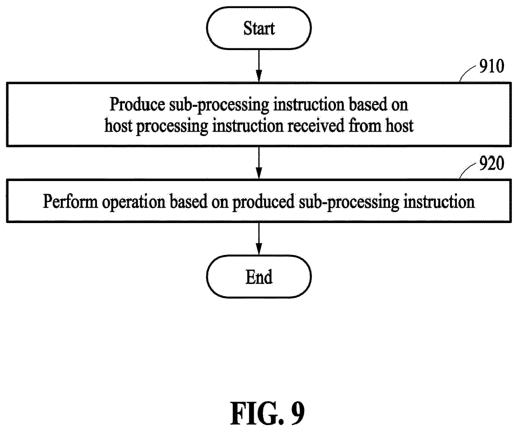

FIG. 9 illustrates an example of a method of operating a memory device.

In operation 910, a memory device may produce a sub-processing instruction based on a host processing instruction received from a host. The memory device according to an example may receive the host processing instruction from the host. The host processing instruction may include, for example, an operation identification code (OPCODE) and operand information. A device controller (e.g., an instruction decoder of the device controller) of the memory device may identify a processing engine to process the corresponding host processing instruction based on the operation identification code. For example, the memory device may include an instruction decoder for each operation level. When an operation identification code of an instruction corresponds to an operation level of the instruction decoder, the instruction decoder of each operation level may transmit the instruction to a processing engine of the corresponding operation level. When the operation identification code does not correspond to the corresponding operation level, the instruction decoder of the corresponding level may control the decomposition of the instruction by transmitting the instruction to an instruction generator of the lower level.

In operation 920, the memory device may perform an operation based on the produced sub-processing instruction. For example, the memory device (e.g., the device controller) may transmit the sub-processing instruction to a processing engine (e.g., a processing engine of the first level). For reference, the decomposed sub-processing instructions may be transmitted to an additional PNM engine (e.g., a processing engine of the first level) shown in FIG. 7 for an SLS operation. The corresponding additional PNM engine may obtain values of a table indicated by the corresponding sub-processing instruction from memory blocks, group the obtained values based on a length vector, and sum the grouped values.

The memory device according to an example may have an offloaded operation function. For example, the memory device may be configured to perform PIM and/or PNM. In the memory device, a PIM module and a PNM module may be hierarchically arranged. The memory device may efficiently transmit instructions in a hierarchical memory operation structure. The memory device may quickly perform a memory-bounded operation (e.g., an operation with limited memory bandwidth and memory capacity) through the operation modules (e.g., processing engines) arranged in a hierarchical structure. Also, the memory device may efficiently perform an operation suitable for characteristics of each memory layer. As described above, the memory device may control the processing sequence of consecutive instructions and pieces of data. The memory device may be mounted on an electronic device including a data processing unit (DPU) or a network interface card (NIC). The memory device may be implemented as an acceleration dual in-line memory module (AXDIMM) and/or a compute express link (CXL) memory. In the memory device, the PIM engine may be suitable for operations (e.g., addition and multiplication) using parallelization of memory bank levels, and the PNM engine may be suitable for aggregation and control operations using relatively large logic block (e.g., an assembly of logic circuits).

The memory device of one or more embodiments may perform a high-level operation function using one or more operation modules (e.g., PNM modules) positioned in a logic die, and a plurality of operation modules (e.g., PIM engines) positioned in a memory die may perform low-level operation functions. The memory device may perform the operation again by collecting operation results according to the low-level operation function. Through the multi-level operation, an operation range offloaded from the memory device may be expanded. The memory device may receive a complicated instruction from the host and reproduce the complicated instruction as a simple operation instruction for the low-level operation function. Accordingly, the memory device of one or more embodiments may reduce resources used for reproducing the instruction in the host, and may also reduce the number of instruction packets transmitted to the memory interface.

Examples of operations performed by the memory device and the operating method thereof according to FIGS. 1 to 9 will be described below.

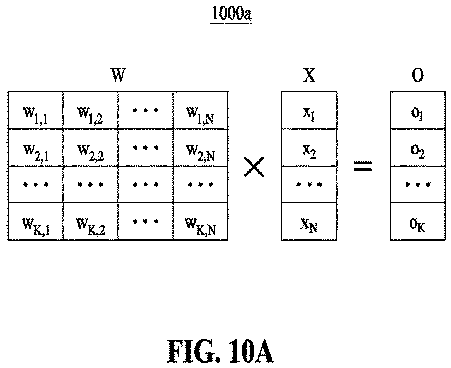

FIGS. 10A to 10D illustrate an example of performing a neural network operation by a memory device.

FIG. 10A shows a MAC operation as an example of the neural network operation. For example, a fully-connected (FC) operation 1000a of a neural network may be an operation of generating an output vector by multiplying a weight matrix by a vector (e.g., an input vector) input to an FC layer. In the FC operation 1000a shown in FIG. 10A, a weight matrix W may be a K × N-dimensional matrix, and an input vector X may be an N-dimensional vector. In this example, "K" and "N" may be an integer greater than or equal to "1." A weight element value w_{k,i} may denote an element value of an i-th row and a k-th column in the weight matrix W. In this example, "i" may be an integer greater than or equal to 1 and less than or equal to "N", and "k" may be an integer greater than or equal to 1 and less than or equal to "K." An output vector O, which is a result of matrix multiplication between the input vector X and the weight matrix W, may be a K-dimensional vector. However, the ranges of indices "k" and "i" are not limited to those described above, and "k" may have an index of an integer greater than or equal to 0 and less than or equal to "K-1", and "i" may have an index of an integer greater than or equal to 0 and less than or equal to "N-1" according to construction.

The memory device according to an example may receive a host processing instruction shown in Table 1 below, for example, from the host for the FC operation described above. The memory device may obtain information on a weight matrix and an input vector, which are targets of the FC operation, through the host processing instruction shown in Table 1 below. The memory device may obtain a weight matrix start address and a weight matrix size from a processing instruction FC0. The memory device may obtain an input vector start address and an input vector size from a processing instruction FC1.

**Table 1:**

| OPCODE | Operand information | |
|---|---|---|
| FC0 | Weight matrix start address | Weight matrix size |
| FC1 | Input vector start address | Input vector size |

When the data size of the weight matrix described above is large, it may be difficult for the PIM engine of the memory device to access the entire weight matrix at once. For reference, several PIM engines may be able to access one memory block, however, a range of the memory accessible by a single PIM engine may be limited. According to an example, the memory device may store data by dividing the data in fragment units. The fragment unit may represent a data size unit accessible by a single PIM engine. The memory device may store weight elements of the weight matrix by dividing them in fragment units. FIGS. 10A to 10D show an example in which two element values are grouped into one fragment, but this is merely for clarification, and the fragment size is not limited thereto.

A device controller of the memory device may produce sub-processing instructions in fragment units as shown in Table 2 below, for example, in response to the host processing instructions according to Table 1 described above.

**Table 2:**

| OPCODE | Operand information | |
|---|---|---|
| Read | Input frag_1 address | |
| DOT | Weight frag(1,1) address | Input frag_1 data |
| ... | ... | ... |
| DOT | Weight frag(K,1) address | Input frag_1 data |
| ... | ... | ... |
| Read | Input frag_i address | |
| DOT | Weight frag(1,i) address | Input frag_i data |
| ... | ... | ... |
| DOT | Weight frag(K,i) address | Input frag_i data |
| ... | ... | ... |
| Read | Input frag_L address | |
| DOT | Weight frag(1,L) address | Input frag_L data |
| ... | ... | ... |
| DOT | Weight frag(K,L) address | Input frag_L data |

Referring to Table 2 described above, a read instruction and a plurality of DOT instructions may be produced for each fragment, as the sub-processing instructions. For example, the memory device may produce a read instruction for an i-th input fragment and DOT instructions based on a first weight fragment to a K-th weight fragment applied to the i-th input fragment. When K+1 sub-processing instructions are produced for each fragment, a total number of sub-processing instructions may be L × (K + 1).

The memory device may produce each fragment described above (e.g., the input fragment) and instructions (e.g., the sub-processing instructions) corresponding to the corresponding fragment by dividing the input vector into fragment units. Fragment-based data may represent fragment-sized data (frag_size). For example, the device controller of the memory device may divide the input vector into a plurality of input fragments (e.g., L fragments). L is the number of input fragments divided from the input vector having N element values, and may be determined, for example, as a ceiling value of a value obtained by dividing the number of elements N included in the input vector by the fragment size (frag_size). L may be expressed as L = ceil(N/frag_size). ceil() may represent a ceiling function. For reference, an operation of dividing an input vector into input fragments may be performed, for example, by a PNM engine.

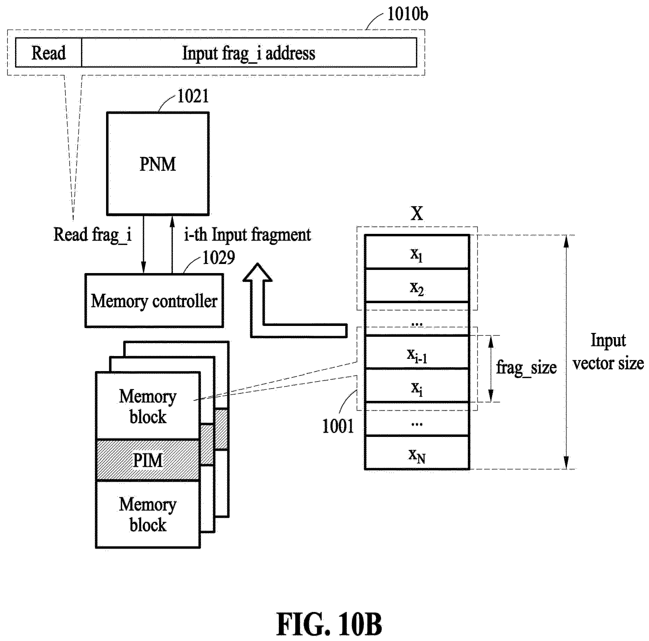

FIG. 10B shows the processing of a read instruction 1010b for the i-th input fragment in Table 2.

The device controller of the memory device may transmit the read instruction 1010b to a PNM engine 1021. For reference, when the start address of the input vector X (e.g., the input vector start address) in Table 1 is received from the host, the device controller of the memory device may identify the start address of each input fragment of the input vector X based on the fragment size. The PNM engine 1021 may request an inquiry about the i-th fragment from a memory controller 1029 of a memory die of the memory device. The memory controller 1029 may transmit element values corresponding to an i-th input fragment 1001 of the input vector X to the PNM engine 1021 and/or the device controller. In the example shown in FIG. 10B, the fragment size (frag_size) is a size representing two element values, and therefore, the memory controller 1029 may return xᵢ₋₁ and xᵢ to the PNM engine 1021.

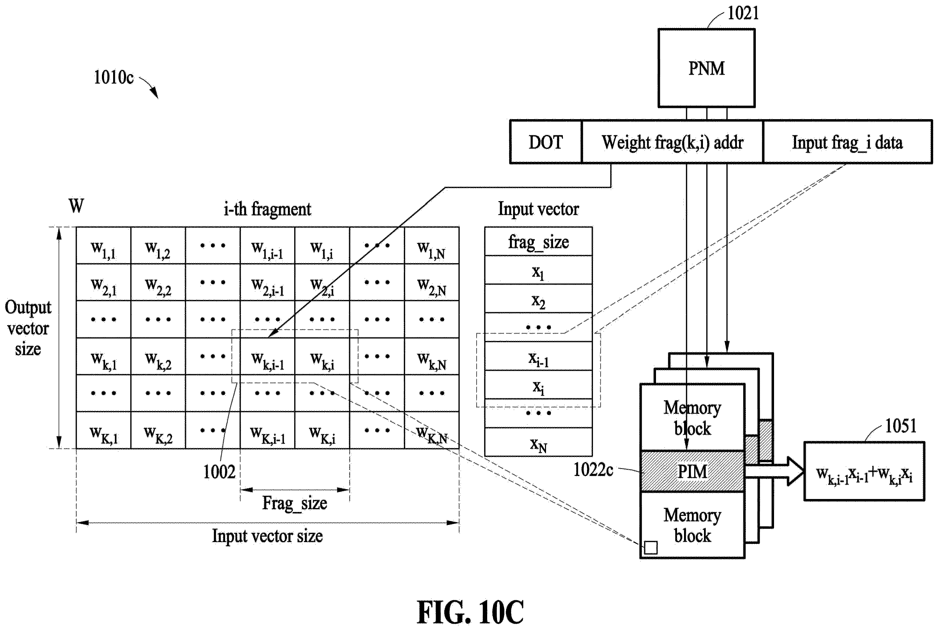

FIG. 10C shows the processing of a DOT instruction 1010c for a k-th weight fragment among sub-processing instructions corresponding to the i-th fragment in Table 2.

The device controller of the memory device may transmit the DOT instruction 1010c including i-th input fragment data (input frag_i data) produced by the PNM engine 1021 and address (Weight frag(k,i) address) of a memory, in which elements 1002 corresponding to the i-th fragment in a k-th row among the elements of the weight matrix are disposed, to a PIM engine 1022c. For example, the memory controller may transmit the DOT instruction 1010c described above to the PIM engine 1022c that may access a memory block, in which the weight elements 1002 corresponding to the i-th fragment in the k-th row are disposed.

The PIM engine 1022c may read the weight elements 1002 corresponding to the DOT instruction 1010c, multiply the read weight elements 1002 (e.g., w_{k,i-1} and w_{k,i}) by input fragments (e.g., xᵢ₋₁ and xᵢ) received from the PNM engine 1021 elementwise, and sum the results, thereby generating a partial operation result 1051. For example, in the example shown in FIG. 10C, the partial operation result 1051 may be w_{k,i-1}xᵢ₋₁+ w_{k,1}xᵢ.

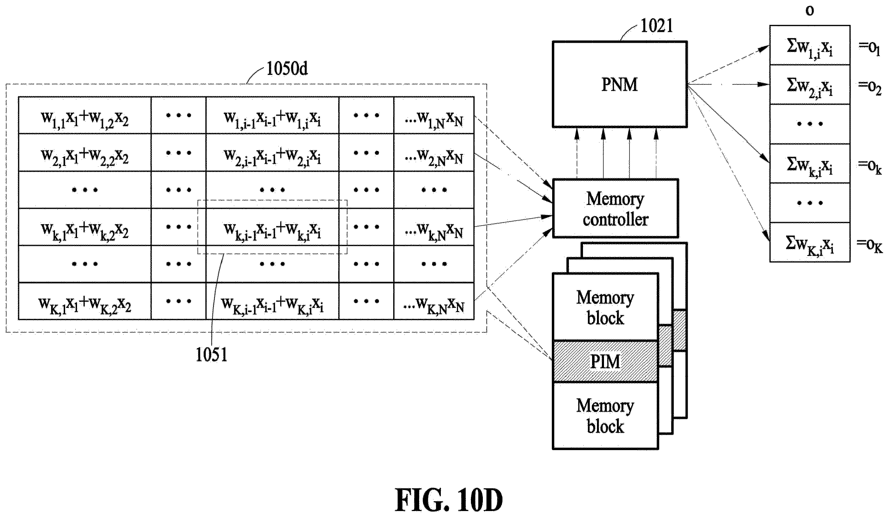

FIG. 10D shows merging of partial operation results of FIGS. 10B and 10C.

In the memory device according to an example, PIM engines may generate operation results 1050d including the partial operation results 1051. The operation results 1050d may be transmitted to the PNM engine 1021 from the corresponding PIM engine each time the operation results 1050d are generated. The PNM engine 1021 may wait until all partial MAC operations by the sub-processing instructions of Table 2 are completed. The PNM engine 1021 may sum up partial operation results of the partial MAC operations by row. A summation result for each row may be o₁, o₂, ...oₖ, ..., or o_{K}, as an element of an output vector. Accordingly, the PNM engine 1021 may determine a final output vector O = [o₁, o₂,...oₖ, ..., o_{K}] and transmit the final output vector O to the host. Alternatively, a device interface of the device controller may transmit the final output vector O to the host.

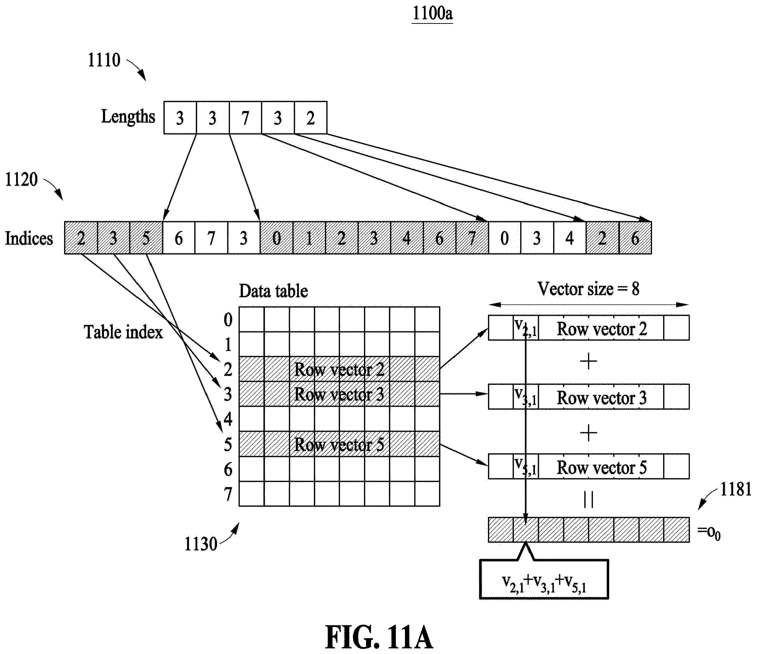

FIGS. 11A to 11D illustrate an example of performing an SLS operation by a memory device.

FIG. 11A shows an outline of the SLS operation.

For example, an SLS operation 1100a may be an operation of generating new output data by summing individual element values of row vectors at least partially referenced in a data table 1130 columnwise.

An indices vector 1120 may include, as element values, indices sequentially indicating rows, the targets of the SLS operation, in the data table 1130. For example, in FIG. 11A, the indices vector 1120 may include element values of [2, 3, 5,..., 2, 6], and may include indices sequentially indicating a second row, a third row, a fifth row, ..., the second row, and a sixth row in the data table 1130. For reference, in the examples shown in FIGS. 11A to 11D, when the number of rows of the data table 1130 is R, the index may be an integer greater than or equal to 0 and less than or equal to "R-1". In this example, "R" may be an integer greaterthan or equal to "1."

A lengths vector 1110 may include, as element values, numbers of row vectors to be summed into one vector (e.g., an output vector 1181) among row vectors referenced by the indices vector 1120 described above. For example, in FIG. 11A, the lengths vector 1110 may include element values of [3, 3, 7, 3, 2], and may sequentially indicate to sum three row vectors columnwise, to sum three row vectors columnwise, to sum seven row vectors columnwise, to sum three row vectors columnwise, and to sum two row vectors columnwise. In other words, the element values of the lengths vector 1110 may represent the number of element values of the indices vector 1120 being sequentially sliced, and may be interpreted as the numbers of row vectors, sequentially referenced by the indices vector 1120, being sequentially grouped (or summed).

For example, a first element value of the lengths vector 1110 in the data table 1130 is 3, and accordingly, the columnwise summation for three row vectors (e.g., a row vector 2, a row vector 3, and a row vector 5) referenced by first three element values of the indices vector 1120 may be performed. For example, when a second element value of the row vector 2 is v_{2,1}, a second element value of the row vector 3 is v_{3,1}, and a second element value of the row vector 5 is v_{5,1}, a second element value of the output vector 1181 may be v_{2,1} + v_{3,1} + v_{5,1} which is the sum (LengthsSum) of the second element values of the row vectors. In the example shown in FIG. 11A, when the number of elements of the lengths vector 1110 is five and the number of elements of each row vector of the data table is eight, five output vectors having eight elements may be generated. In other words, the output data may be a matrix in a 5 × 8 dimension.

According to an example, the memory device may perform instructions for the SLS operation. An example of a processing instruction used in offloading the SLS operation of Caffe2 to a memory device will be described. For example, a memory device may receive a host processing instruction for the SLS operation as shown in Table 3 below, for example, from a host.

**Table 3:**

| OPCODE | Operand information | | |
|---|---|---|---|
| SLS0 | Table start address | Table size | Vector size |
| SLS1 | Lengths start address | Lengths size | |
| SLS2 | Indices start address | Indices size | |

The host processing instruction for the SLS operation may be expressed as an instruction group as shown in Table 3 described above. The memory device may decompose the host processing instruction shown in Table 3 into sub-processing instructions expressed for each row of Table 4 below, an example of which will be described below. Operation identification codes SLS0, SLS1, and SLS2 may be codes reserved for the host processing instructions indicating the SLS operations. The values corresponding to the code SLS0 may include a table start address, a table size, and a vector size (e.g., a size of a row vector in the data table 1130, that is a size corresponding to the number of elements included in the row vector), and the values corresponding to the code SLS1 may include a start address of the lengths vector 1110 and a length size of the lengths vector 1110 (e.g., a size corresponding to the number of elements included in the lengths vector 1110). In Table 3 described above, the table start address may represent a first address of the entire data table. The table size may represent the size of the entire data table. The values corresponding to the code SLS2 may include a start address of the indices vector 1120 and a size (indices size) of the indices vector 1120 (e.g., a size corresponding to the number of elements included in the indices vector 1120). As described above, the host may transmit only table information, indices vector 1120 information, and vector size information, as input values, together with the operation identification code (OPCODE) to the memory device, without the need for the transmission of the number of instructions corresponding to the number of elements of the indices vector 1120.

For example, a device controller (e.g., an instruction generator) may reproduce the processing instruction of Table 3 described above as sub-processing instructions of Table 4 below, for example. The device controller may produce a sub-processing instruction indicating the reading of the indices vector 1120, a sub-processing instruction indicating the reading of the lengths vector 1110, and a series of sub-processing instructions indicating the individual reading of identified row vectors, from the host processing instruction indicating the SLS operation.

**Table 4:**

| OPCODE | Operand information | |
|---|---|---|
| READ | Indices start address | Indices size |
| READ | Lengths start address | Lengths size |
| READ | Row[lndex[0]] address | Vector size |
| ... | ... | ... |
| READ | Row[lndex[j]] address | Vector size |
| ... | ... | ... |
| READ | Row[lndex[P-1]] address | Vector size |

Table 4 may show the sub-processing instructions (e.g., the sub-processing instruction indicating the reading). Each sub-processing instruction may be transmitted to a corresponding processing engine (e.g., a PNM engine). In Table 4 described above, P is, for example, the number of elements included in the indices vector 1120 and may be an integer greater than or equal to 1. Index[j] may represent an index value indicated by a j-th element in the indices vector 1120, and j may be an integer greater than or equal to 0 and less than or equal to "P-1."

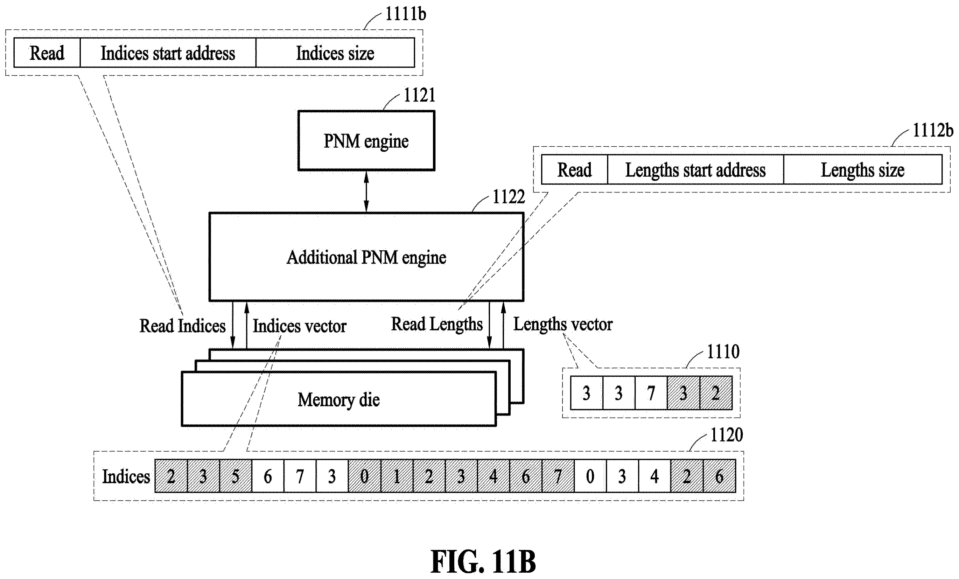

FIG. 11B shows the reading of an indices vector and a lengths vector.

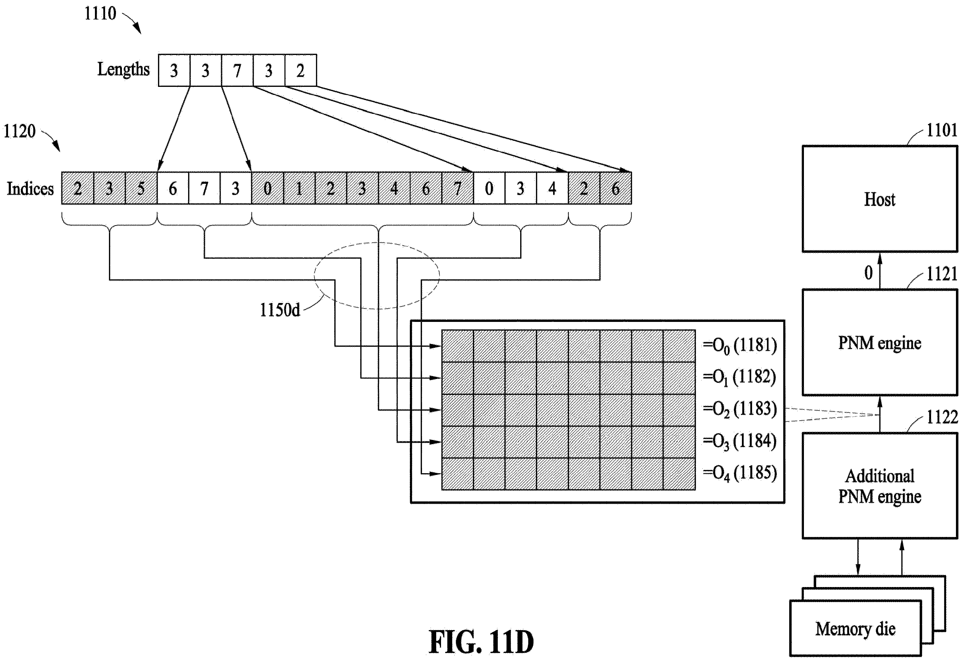

For example, as shown in FIG. 11B, an additional PNM engine 1122 may access a memory of a memory die based on a read instruction 1111b for the indices vector received from a device controller. The additional PNM engine 1122 may obtain the indices vector 1120 from the memory. Similarly, the additional PNM engine 1122 may access the memory of the memory die based on a read instruction 1112b for the lengths vector. The additional PNM engine 1122 may obtain the lengths vector 1110 from the memory. As will be described later in an example, a PNM engine 1121 is a processing engine of a higher operation level than the additional PNM engine 1122, and may integrate operation results obtained by the additional PNM engine 1122, as described with reference to FIG. 11D.

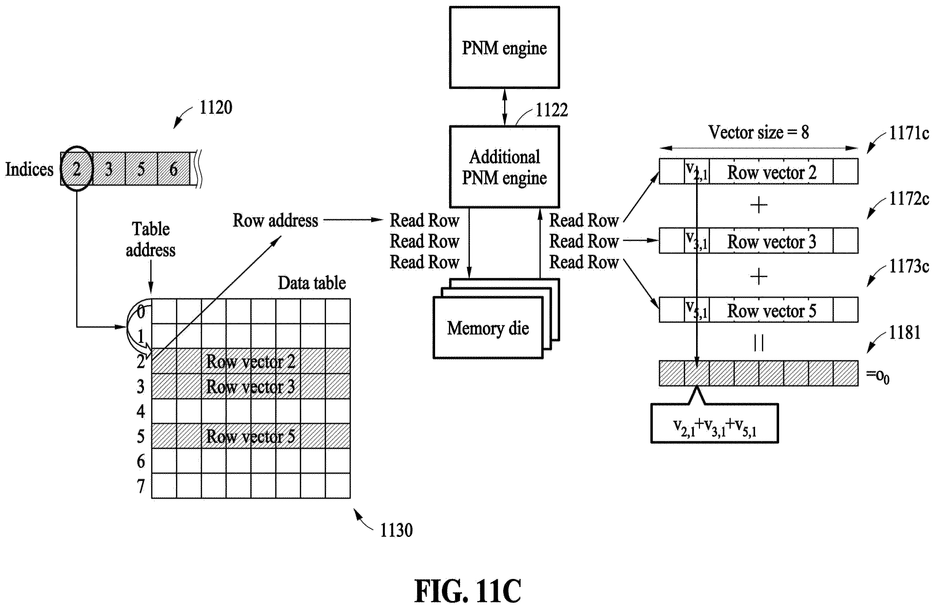

FIG. 11C shows an operation of the additional PNM engine 1122 that reads a row vector of a data table based on the information read in FIG. 11B.

The additional PNM engine 1122 may determine an address where, a row vector corresponding to an index indicated by a corresponding index value is positioned, from a start address of the data table 1130 based on the individual element values of the indices vector 1120. For example, the additional PNM engine 1122 may apply a value combined based on a size of each row vector and an index of a row vector, which is a target of reading, to the start address of the data table 1130, to determine an address (e.g., a row address) where the corresponding row vector is positioned. The additional PNM engine 1122 may determine row addresses corresponding to the indices (e.g., [2, 3, 5] in FIG. 11C) grouped based on the element values of the lengths vector 1110 from the indices vector 1120. The additional PNM engine 1122 may access a memory block, in which row vectors corresponding to the determined row addresses are stored, and read row vectors 1171c, 1172c, and 1173c through a memory controller of the memory die. For example, the additional PNM engine 1122 may read the row vectors 1171c, 1172c, and 1173cwith a vector size of 8.

The additional PNM engine 1122 may apply a lengths sum to the read row vectors 1171c, 1172c, and 1173c. The additional PNM engine 1122 may generate an output vector 1181 by summing the row vectors 1171c, 1172c, and 1173c columnwise. For example, in the same manner as described above with reference to FIG. 11A, a second element value of the output vector 1181 may be v_{2,1} + v_{3,1} + v_{5,1} which is the sum (e.g., LengthsSum) of second element values of the row vectors.

FIG. 11D shows generation of output vectors corresponding to elements of lengths vectors.

The device controller and/or the additional PNM engine 1122 of the memory device according to an example may perform the same and/or similar operations to those described with reference to FIGS. 11 Band 11C with respect to the remaining elements of the lengths vector. For example, when a second element value of the lengths vector is 3, the additional PNM engine 1122 may perform a length sum operation 1150d of row vectors corresponding to the next three index values (e.g., 6, 7, and 3) in the indices vector 1120. Similarly, the additional PNM engine 1122 may perform the length sum operation 1150d of row vectors corresponding to the next seven index values (e.g., 0, 1, 2, 3, 4, 6, and 7) in the indices vector 1120 for a third element value 7 of the lengths vector. The additional PNM engine 1122 may perform the length sum operation 1150d of row vectors corresponding to the next three index values (e.g., 0, 3, and 4) in the indices vector 1120 for a fourth element value 3 of the lengths vector. The additional PNM engine 1122 may perform the length sum operation 1150d of row vectors corresponding to the next two index values (e.g., 2 and 6) in the indices vector 1120 for a fifth element value 2 of the lengths vector. Accordingly, the additional PNM engine 1122 may generate output vectors 1181, 1182, 1183, 1184, and 1185, the number of which corresponds to the number of elements included in the lengths vector 1110.

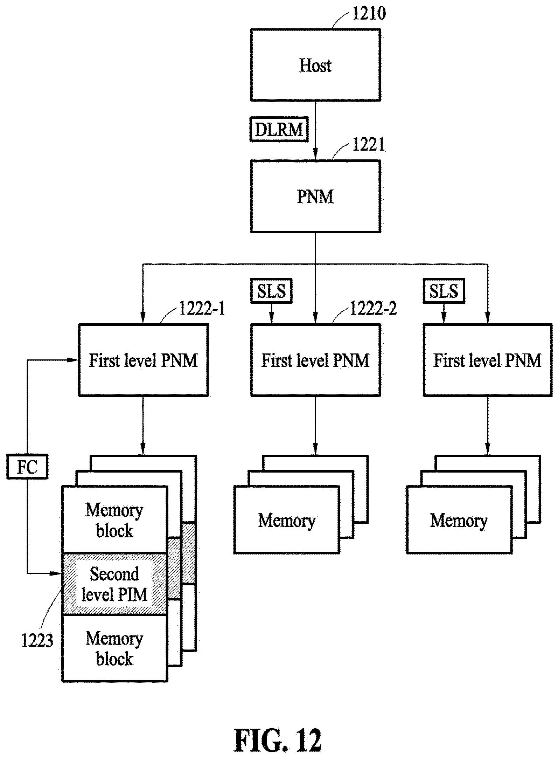

For reference, the additional PNM engine 1122 shown in FIG. 11B is a processing engine of a first level, and operation results obtained by the additional PNM engine 1122 may be integrally processed in the PNM engine 1121 of the highest level, as described with reference to FIG. 12. The additional PNM engine 1122 may individually transmit the output vectors 1181, 1182, 1183, 1184, and 1185 to the PNM engine 1121 or may record (write) the output vectors 1181, 1182, 1183, 1184, and 1185 in a separate memory space. The PNM engine 1121 may provide output data (e.g., an output matrix O) obtained by integrating the output vectors 1181, 1182, 1183, 1184, and 1185 to a host 1101.

FIG. 12 illustrates an example of execution of a deep learning recommendation model (DLRM) by a memory device.

As shown in FIG. 12, a memory device according to an example may include processing engines arranged in three or more layers. A host may transmit a host processing instruction for the operation of the DLRM to the memory device. A device controller of the memory device may decompose the host processing instruction for the DLRM and distribute sub-processing instructions to low-level processing engines. For example, the host processing instruction for the DLRM may be decomposed into an FC operation and an SLS operation, and sub-processing instructions for the FC operation and the SLS operation may be transmitted to corresponding processing engines. A first level PNM engine 1222-1 and a second level PIM engine 1223 may perform the FC operation described with reference to FIGS. 10A to 10D, and a first level PNM engine 1222-2 may perform the SLS operation described with reference to FIGS. 11A to 11D. The PNM engine 1221 may generate a final determination result obtained by integrating results of the FC operation and the SLS operation.

The electronic devices, processor cores, memory controllers, memory devices, processing engines, device controllers, memory blocks, host processors, logic dies, PNM engines, first level processing engines, memory dies, hosts, device interfaces, address decoders, instruction buffers, instruction control modules, memory schedulers, instruction decoders, instruction generators, PIM engines, host memory controllers, host memory schedulers, second level processing engines, first level PNM engines, second level PIM engines, electronic device 100, processor core 111, memory controller 112, memory device 120, processing engine 121, device controller 123, memory blocks 122, host processor201, memory device 202, logic die 291, device controller 230, PNM engine 211, first level processing engine 212, memory blocks 220, memory die 292, host 301, memory device 302, logic die 391, device controller 330, device interface 331, address decoder 332, instruction buffer 333, instruction control module 336, memory scheduler 339, instruction decoder 334, instruction generator 335, PNM engine 311, memory blocks 320, PIM engine 312, memory die 392, host 401, host memory controller 412, memory device 402, host 510, host memory scheduler 512, memory device 520, instruction buffer 533, host 610, memory device 620, PNM engine 621, processing engines 622, host 710, PNM engine 721, first level processing engines 722, second level processing engines 723, device interface 831, address decoder 832, instruction buffer 833, memory scheduler 839, instruction control module 836, PNM engine 811, control modules 838-1 and 838-2, processing engines 812-1 and 812-2, second level processing engines 813-1, 813-2, 813-3, 813-4, PNM engine 1021, PNM engine 1121, additional PNM engine 1122, host 1101, host 1101, PNM engine 1221, first level PNM engines 1222-1 and 1222-2, second level PIM engine 1223, and other apparatuses, devices, units, modules, and components disclosed and described herein with respect to FIGS. 1-12 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-12 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the present invention is defined in the enclosed claims.

### The following is a list of further preferred embodiments of the invention:

Embodiment 1. A memory device comprising:
a device controller configured to generate a sub-processing instruction based on a host processing instruction received from a host; and
a processing engine configured to perform an operation based on the generated sub-processing instruction.

Embodiment 2. The memory device of embodiment 1,
wherein the processing engine is configured to generate an intermediate result by performing the operation according to the generated sub-processing instruction, and
further comprising a processing near-memory (PNM) engine configured to, in response to obtaining the generated intermediate result, generate an operation result of the operation by processing the generated intermediate result.

Embodiment 3. The memory device of embodiment 1, wherein the processing engine comprises either one or both of:
a processing near-memory (PNM) engine configured to perform a PNM operation according to the generated sub-processing instruction; and
a processing in-memory (PIM) engine configured to perform a PIM operation according to the generated sub-processing instruction.

Embodiment 4. The memory device of embodiment 3, wherein the device controller is configured to:
generate a first level instruction as the sub-processing instruction from the host processing instruction and transmit the first level instruction to the PNM engine; and
generate a second level instruction from the first level instruction and transmit the second level instruction to the PIM engine.

Embodiment 5. The memory device of embodiment 1, wherein the device controller comprises:
a device interface configured to receive a packet from the host; and
an address decoder configured to identify whether the received packet indicates either a memory access request or a processing request, based on an access address of the received packet.

Embodiment 6. The memory device of embodiment 1, wherein
the device controller is configured to receive, from the host, a plurality of host processing instructions comprising the host processing instruction in a first order; and
the processing engine is configured to perform operations by processing the host processing instructions in a second order that is different from the first order and is determined based on access addresses of the host processing instructions.

Embodiment 7. The memory device of embodiment 1, wherein the device controller comprises an instruction buffer configured to store the host processing instruction in an order designated by the host, in response to a received packet being identified as indicating a processing request.

Embodiment 8. The memory device of embodiment 7, wherein the instruction buffer is configured to:
traverse and increment an instruction counter; and
in response to the host processing instruction being stored in an entry indicated by the instruction counter, transmit the stored host processing instruction to an instruction decoder.

Embodiment 9. The memory device of embodiment 1, wherein the device controller comprises an instruction decoder configured to transmit an operation corresponding to the host processing instruction received from an instruction buffer to either one or both of a processing near-memory (PNM) engine and an instruction generator.

Embodiment 10. The memory device of embodiment 9, wherein the instruction decoder is configured to transmit the host processing instruction to the PNM engine, in response to the host processing instruction matching with a pre-stored operation identification code for an operation level corresponding to the instruction decoder.

Embodiment 11. The memory device of embodiment 9, wherein the instruction decoder is configured to transmit the host processing instruction to the instruction generator, in response to the host processing instruction not matching with a pre-stored operation identification code for an operation level corresponding to the instruction decoder.

Embodiment 12. The memory device of embodiment 1, wherein the device controller comprises an instruction generator configured to generate the sub-processing instruction from the received host processing instruction, and transmit the generated sub-processing instruction to a memory scheduler.

Embodiment 13. The memory device of embodiment 12, wherein the instruction generator comprises a predefined instruction table and is configured to have generate the sub-processing instruction according to a result of matching between the instruction table and the host processing instruction.

Embodiment 14. The memory device of embodiment 12, wherein the instruction generator is configured to, in response to the host processing instruction being either one of a sparse lengths sum (SLS) operation and a multiplication and accumulation (MAC) operation, generate the sub-processing instruction for the corresponding either one of the SLS operation and the MAC operation.

Embodiment 15. The memory device of embodiment 1, wherein the device controller comprises a memory scheduler configured to schedule access by processing host memory instructions in an out-of-order mode, in response to a normal memory access to memory blocks being requested from the host.

Embodiment 16. The memory device of embodiment 1, wherein the device controller comprises a memory scheduler configured to schedule access to memory blocks by processing the host processing instructions in an in-order mode, in response to the host processing instruction being requested from the host.

Embodiment 17. The memory device of embodiment 1, further comprising a logic die in which a processing near-memory (PNM) engine configured to generate an operation result and the device controller are disposed.

Embodiment 18. The memory device of embodiment 17, wherein an additional PNM engine configured to receive a PIM operation result and generate an intermediate result is additionally disposed in the logic die.

Embodiment 19. The memory device of embodiment 1, further comprising a memory die in which a memory block configured to store data and a processing in-memory (PIM) engine of the processing engine are disposed, wherein the PIM engine configured to generate a PIM operation result.

Embodiment 20. The memory device of embodiment 1, wherein the device controller is configured to:
receive the host processing instruction from the host; and
transmit, to the host, a final operation result according to a series of operations corresponding to the host processing instruction.

Embodiment 21. The memory device of embodiment 1, wherein
the sub-processing instruction comprises a dot product instruction comprising input fragments of an input vector and an address of weight elements of a weight matrix, and
for the performing of the operation based on the generated sub-processing instruction, the processing engine is configured to read the weight elements from a memory block based on the address, and generate a partial operation result based on the read the weight elements and the input fragments.

Embodiment 22. The memory device of embodiment 21, further comprising a processing near-memory (PNM) engine configured to generate a final output vector based on a plurality of partial operation results including the partial operation result.

Embodiment 23. An electronic device comprising:
the memory device of embodiment 1; and
the host, wherein the host is a host processor.

Embodiment 24. A method of operating a memory device, the method comprising:
generating a sub-processing instruction based on a host processing instruction received from a host; and
performing an operation based on the generated sub-processing instruction.

Embodiment 25. A memory device comprising:
a memory configured to store data;
a processing engine configured to perform an operation using data stored in the memory; and
a memory device controller configured to:
   receive a host processing instruction from a host;
   generate, based on the received host processing instruction, a sub-processing instruction to be used in an operation of the processing engine; and
   transmit the sub-processing instruction to the processing engine.

Embodiment 26. The memory device of embodiment 25, further comprising:
a memory die comprising the memory; and
a logic die comprising the memory device controller.
Embodiment 27. The memory device of embodiment 26, wherein the logic die comprises the processing engine.
Embodiment 28. The memory device of embodiment 27, wherein
   the processing engine of the logic die is a first processing engine, and
   the memory die further comprises a plurality of second processing engines.
Embodiment 29. The memory device of embodiment 28, wherein
   the memory comprises a plurality of memory blocks, and
   the second processing engines are positioned between the memory blocks.
Embodiment 30. The memory device of embodiment 26, wherein the memory die comprises the processing engine.
Embodiment 31. The memory device of embodiment 30, wherein
   the processing engine of the memory die is a second processing engine, and
   the logic die further comprises a first processing engine.
Embodiment 32. The memory device of embodiment 31, wherein the memory die comprises a plurality of second processing engines.
Embodiment 33. A memory device comprising:
   a device controller configured to generate sub-processing instructions based on a host processing instruction received from a host;
   second processing engines each configured to generate a partial result based on a respective one of the generated sub-processing instructions; and
   a first processing engine configured to generate an operation result of the operation by processing the generated partial results.
Embodiment 34. The memory device of embodiment 33, wherein the first processing engine is a processing near-memory (PNM) engine and the second processing engines are processing in-memory (PIM) engines.

## Claims

1. A memory device comprising:
a device controller configured to generate a sub-processing instruction based on a host processing instruction received from a host; and
a processing engine configured to perform an operation based on the generated sub-processing instruction.

2. The memory device of claim 1,
wherein the processing engine is configured to generate an intermediate result by performing the operation according to the generated sub-processing instruction, and
further comprising a processing near-memory, PNM, engine configured to, in response to obtaining the generated intermediate result, generate an operation result of the operation by processing the generated intermediate result.

3. The memory device of claim 1 or 2, wherein the processing engine comprises either one or both of:
a processing near-memory, PNM, engine configured to perform a PNM operation according to the generated sub-processing instruction; and
a processing in-memory, PIM, engine configured to perform a PIM operation according to the generated sub-processing instruction,
wherein the device controller is configured to:
generate a first level instruction as the sub-processing instruction from the host processing instruction and transmit the first level instruction to the PNM engine; and
generate a second level instruction from the first level instruction and transmit the second level instruction to the PIM engine.

4. The memory device of one of claims 1 to 3, wherein the device controller comprises:
a device interface configured to receive a packet from the host; and
an address decoder configured to identify whether the received packet indicates either a memory access request or a processing request, based on an access address of the received packet.

5. The memory device of one of claims 1 to 4, wherein
the device controller is configured to receive, from the host, a plurality of host processing instructions comprising the host processing instruction in a first order; and
the processing engine is configured to perform operations by processing the host processing instructions in a second order that is different from the first order and is determined based on access addresses of the host processing instructions.

6. The memory device of one of claims 1 to 5, wherein the device controller comprises either an instruction buffer or an instruction decoder, wherein
the instruction buffer is configured to store the host processing instruction in an order designated by the host, in response to a received packet being identified as indicating a processing request, and
the instruction decoder is configured to transmit an operation corresponding to the host processing instruction received from an instruction buffer to either one or both of a processing near-memory, PNM, engine and an instruction generator,
wherein the instruction buffer is further configured to traverse and increment an instruction counter, and in response to the host processing instruction being stored in an entry indicated by the instruction counter, transmit the stored host processing instruction to the instruction decoder, and
wherein the instruction decoder is further configured to transmit the host processing instruction to the PNM engine, in response to the host processing instruction matching with a pre-stored operation identification code for an operation level corresponding to the instruction decoder, and/or
wherein the instruction decoder is further configured to transmit the host processing instruction to the instruction generator, in response to the host processing instruction not matching with a pre-stored operation identification code for an operation level corresponding to the instruction decoder.

7. The memory device of one of claims 1 to 6, wherein the device controller comprises an instruction generator configured to generate the sub-processing instruction from the received host processing instruction, and transmit the generated sub-processing instruction to a memory scheduler.

8. The memory device of claim 7, wherein the instruction generator comprises a predefined instruction table and is configured to have generate the sub-processing instruction according to a result of matching between the instruction table and the host processing instruction, and/or
wherein the instruction generator is configured to, in response to the host processing instruction being either one of a sparse lengths sum, SLS, operation and a multiplication and accumulation, MAC, operation, generate the sub-processing instruction for the corresponding either one of the SLS operation and the MAC operation.

9. The memory device of one of claims 1 to 8, wherein the device controller comprises a memory scheduler configured to schedule access by processing host memory instructions in an out-of-order mode, in response to a normal memory access to memory blocks being requested from the host, or
wherein the device controller comprises a memory scheduler configured to schedule access to memory blocks by processing the host processing instructions in an in-order mode, in response to the host processing instruction being requested from the host, or
wherein the device controller is configured to:
receive the host processing instruction from the host; and
transmit, to the host, a final operation result according to a series of operations corresponding to the host processing instruction.

10. The memory device of one of claims 1 to 9, further comprising a logic die in which a processing near-memory, PNM, engine configured to generate an operation result and the device controller are disposed,
wherein an additional PNM engine configured to receive a PIM operation result and generate an intermediate result is additionally disposed in the logic die.

11. The memory device of one of claims 1 to 10, further comprising a memory die in which a memory block configured to store data and a processing in-memory, PIM, engine of the processing engine are disposed, wherein the PIM engine configured to generate a PIM operation result.

12. The memory device of one of claims 1 to 11, wherein
the sub-processing instruction comprises a dot product instruction comprising input fragments of an input vector and an address of weight elements of a weight matrix, and
for the performing of the operation based on the generated sub-processing instruction, the processing engine is configured to read the weight elements from a memory block based on the address, and generate a partial operation result based on the read the weight elements and the input fragments, and
further comprising a processing near-memory, PNM, engine configured to generate a final output vector based on a plurality of partial operation results including the partial operation result.

13. The memory device of claim 1,
wherein the device controller is further configured to generate sub-processing instructions based on the host processing instruction received from the host, and
wherein the memory device further comprises:
second processing engines comprising the processing engine, each second processing engine configured to generate a partial result based on a respective one of the generated sub-processing instructions; and
a first processing engine configured to generate an operation result of the operation by processing the generated partial results,
wherein the first processing engine is a processing near-memory, PNM, engine and the second processing engines are processing in-memory, PIM, engines.

14. An electronic device comprising:
the memory device of one of claims 1 to 13; and
the host, wherein the host is a host processor.

15. A method of operating a memory device including a processing engine, a memory device controller, and a memory configured to store data, the method comprising:
performing, by the processing engine, an operation using the data stored in the memory;
receiving, by the memory device controller, a host processing instruction from a host;
generating, by the memory device controller, a sub-processing instruction to be used in an operation of the processing engine based on the received host processing instruction; and
transmitting, by the memory device controller, the sub-processing instruction to the processing engine.
